# EUROPÄISCHE PATENTSCHRIFT

(11) **EP 4 507 859 B1**
(45) Veröffentlichungstag und Bekanntmachung des Hinweises auf die Patenterteilung: **20.05.2026**
(21) Anmeldenummer: 22723090.1
(22) Anmeldetag: 14.04.2022
(51) Int. Cl.: B25J 19/00

(54) **LAGERUNGSVORRICHTUNG UND ROBOTERARM**
SUPPORTING DEVICE, AND ROBOT ARM
DISPOSITIF DE MONTAGE ET BRAS ROBOTISÉ

(43) Veröffentlichungstag der Anmeldung: 19.02.2025
(73) Patentinhaber: KUKA Deutschland GmbH, 86165 Augsburg (DE)
(72) Erfinder: ROHÉ, Frank, 86368 Gersthofen (DE)
(74) Vertreter: Dorow, Florian
(86) Internationale Anmeldenummer: PCT/EP2022/060078
(87) Internationale Veröffentlichungsnummer: WO 2023/198293

(56) Entgegenhaltungen:
- EP-B1- 3 781 371

## Beschreibung

Die Erfindung betrifft eine Lagerungsvorrichtung für eine Leitungsführungsvorrichtung eines Roboterarms, wobei die Leitungsführungsvorrichtung einen Aufnahmeraum aufweist, in dem ein Leitungsabschnitt in einer Auszugsrichtung ausziehbar gelagert ist, zur Lagerung der Leitungsführungsvorrichtung an dem Roboterarm. Die Erfindung betrifft außerdem einen Roboterarm mit einer Leitungsführungsvorrichtung und einer solchen Lagerungsvorrichtung.

Die DE 10 2012 020 172 A1 beschreibt eine Befestigungsvorrichtung für eine Leitungsführungsvorrichtung, die einen Aufnahmeraum aufweist, in dem ein Leitungsabschnitt in einer Auszugsrichtung ausziehbar gelagert ist, zur Lagerung der Leitungsführungsvorrichtung an einem Roboterarm mit mehreren Gliedern und die Glieder gegeneinander verstellenden Gelenken, umfassend einen ersten Anschlusskörper, der ausgebildet ist, zum starren Verbinden des ersten Anschlusskörpers der Befestigungsvorrichtung mit einer Leitungsführungsvorrichtung, einen zweiten Anschlusskörper, der ausgebildet ist, zum starren Verbinden des zweiten Anschlusskörpers der Befestigungsvorrichtung mit einem Glied eines Roboterarms, und ein Gelenk, das ausgebildet ist, den zweiten Anschlusskörper relativ zum ersten Anschlusskörper in zwei verschiedenen, jeweils senkrecht zur Auszugsrichtung orientierten Drehfreiheitsgraden beweglich zu lagern.

Die EP 3 781 371 B1 beschreibt eine Befestigungsvorrichtung für eine Leitungsführungsvorrichtung, die einen Aufnahmeraum aufweist, in dem ein Leitungsabschnitt in einer Auszugsrichtung ausziehbar gelagert ist, zur Lagerung der Leitungsführungsvorrichtung an einem Roboterarm mit mehreren Gliedern und die Glieder gegeneinander verstellenden Gelenken umfassend einen ersten Anschlusskörper, der ausgebildet ist, zum starren Verbinden des ersten Anschlusskörpers der Befestigungsvorrichtung mit einer Leitungsführungsvorrichtung, sowie einen zweiten Anschlusskörper, der ausgebildet ist, zum starren Verbinden des zweiten Anschlusskörpers der Befestigungsvorrichtung mit einem Glied eines Roboterarms, und ein Gelenk, das ausgebildet ist, den zweiten Anschlusskörper relativ zum ersten Anschlusskörper in zwei verschiedenen, jeweils senkrecht zur Auszugsrichtung orientierten Drehfreiheitsgraden beweglich zu lagern.

Aufgabe der Erfindung ist es, eine Lagerungsvorrichtung für eine Leitungsführungsvorrichtung eines Roboterarms zu schaffen, die ein verbessertes, insbesondere verschleißreduzierendes Ausziehen und Einholen einer Energiezuführungsleitung aus einem Aufnahmeraum der Leitungsführungsvorrichtung während des Betriebs an einem Roboterarm ermöglich, wenn die Leitungsführungsvorrichtung mittels der Lagerungsvorrichtung an einem Glied des Roboterarms befestigt ist.

Die Aufgabe wird gelöst durch eine Lagerungsvorrichtung für eine Leitungsführungsvorrichtung eines Roboterarms, wobei die Leitungsführungsvorrichtung einen Aufnahmeraum aufweist, in dem ein Leitungsabschnitt in einer Auszugsrichtung ausziehbar gelagert ist, zur Lagerung der Leitungsführungsvorrichtung an dem Roboterarm, umfassend:
- einen ersten Anschlusskörper, der ausgebildet ist, zum starren Verbinden des ersten Anschlusskörpers der Lagerungsvorrichtung mit einer Leitungsführungsvorrichtung,
- einen zweiten Anschlusskörper, der ausgebildet ist, zum starren Verbinden des zweiten Anschlusskörpers der Lagerungsvorrichtung mit einem Glied eines Roboterarms, und
- eine Lageranordnung, die ausgebildet ist, den ersten Anschlusskörper relativ zum zweiten Anschlusskörper in einem ersten Drehfreiheitsgrad, der senkrecht zur Auszugsrichtung orientiert ist, drehbeweglich zu führen und in einem zweiten Drehfreiheitsgrad, der senkrecht sowohl zur Auszugsrichtung als auch senkrecht zum ersten Drehfreiheitsgrad orientiert ist, in Abhängigkeit der Bewegung des ersten Anschlusskörpers um den ersten Drehfreiheitsgrad, zwangsgeführt zu lagern.

Die Lagerungsvorrichtung dient dazu eine komplette Leitungsführungsvorrichtung an einem Glied eines Roboterarms zu befestigen bzw. zu lagern. Beispielsweise kann im Falle eines Industrieroboters in der Bauart eines Kickarmroboters mit sechs Freiheitsgraden, d.h. mit insgesamt sechs Gelenken die Leitungsführungsvorrichtung an einem Grundarm eines Armauslegers des Roboterarms befestigt bzw. gelagert sein. Der Roboterarm kann beispielsweise ein Grundgestell als ein erstes Glied aufweisen, an dem ein Karussell als ein folgendes zweites Glied um eine vertikale Achse drehbar gelagert und mittels eines ersten Antriebsmotors drehangetrieben ist. An dem Karussell kann eine Schwinge als ein drittes Glied um eine zweite horizontale Achse auf und ab schwenkbar gelagert und mittels eines zweiten Antriebsmotors drehangetrieben sein. Die Schwinge trägt als viertes Glied einen Grundarm des Armauslegers, der um eine dritte horizontale Achse auf und ab schwenkbar gelagert und mittels eines dritten Antriebsmotors drehangetrieben ist. An dem Armausleger ist eine vierte Achse vorgesehen, welche in Längserstreckung des Armauslegers verläuft und über einen vierten Antriebsmotor einen Vorderarm als fünftes Glied drehantreibt. An dem Vorderarm ist eine Roboterhand um eine fünfte Achse schwenkbar gelagert, um diese mittels eines fünften Antriebsmotors schwenkbar bewegen zu können. Ergänzend weist die Roboterhand eine sechste Achse auf, um einen Befestigungsflansch, der ein letztes, siebtes Glied des Roboterarms bildet, mittels eines sechsten Antriebsmotors drehbar antreiben zu können.

Die Leitungsführungsvorrichtung dient dazu, einen Längenausgleich zu ermöglichen, so dass während einer Bewegung des Roboterarms eine Versorgungsleitung möglichst konturnah an den Gliedern und Gelenken des Roboterarms entlang geführt werden kann. Die Leitungsführungsvorrichtung weist dazu im Allgemeinen einen Aufnahmeraum auf, in dem ein Leitungsabschnitt der Versorgungsleitung gespeichert ist, derart, dass in Abhängigkeit der Bewegung des Roboterarms und somit in Abhängigkeit der Bewegung eines insbesondere an einem Flansch des Roboterarms angebrachten, freien Endabschnitts der Versorgungsleitung, der im Aufnahmeraum der Leitungsführungsvorrichtung gespeicherte Leitungsabschnitt herausgezogen oder wieder hineingezogen wird. Die Versorgungsleitung kann dazu federvorgespannt in dem Aufnahmeraum der Leitungsführungsvorrichtung gelagert sein.

Unter einer Versorgungsleitung wird insbesondere eine Energieleitung und/oder eine Energiezuführung verstanden, die Leitungen, wie beispielsweise elektrische Leitungen, Kalt- und/oder Warmwasserleitungen, Fluid- und/oder Druckleitungen zu Werkzeugen, die an dem Roboterarm angeflanscht sind, aufweisen kann. Die Versorgungsleitung, insbesondere die Energieleitung und/oder die Energiezuführung kann in Einzelsträngen oder in Kabelbündel zusammengefasst und insbesondere mit einem oder mehreren flexiblen Schutzschläuchen, wie beispielsweise Wellschläuchen ummantelt sein.

Aufgrund der umfangreichen Bewegungsfreiheit des Flansches des Roboterarms während einer Bewegung des Roboterarms und aufgrund der möglichen hohen Dynamik der Bewegung, wird der ausziehbare Leitungsabschnitt hohen mechanischen Belastungen ausgesetzt. Insbesondere im Bereich eines Austritts des Leitungsabschnitts aus dem Aufnahmeraum der Leitungsführungsvorrichtung wird der Leitungsabschnitt mitunter an Rändern der Austrittsöffnung der Leitungsführungsvorrichtung entlanggeschleift, und zwar mitunter auch unter hohen Biegewinkeln, wenn die Leitungsführungsvorrichtung und insbesondere deren Aufnahmeraum starr an dem Roboterarm befestigt ist.

Mit der erfindungsgemäßen Lagerungsvorrichtung kann die komplette Leitungsführungsvorrichtung in gewissem Umfang der Auszugsbewegung des Leitungsabschnitts folgen, so dass hohe Biegewinkel vermieden werden. Aufgrund der erfindungsgemäßen Lagerungsvorrichtung kann die Leitungsführungsvorrichtung und somit auch der Aufnahmeraum der Bewegung des Leitungsabschnitts selbsttätig nachgeführt werden, da sich die Leitungsführungsvorrichtung wegen der Zugkraft an dem Leitungsabschnitt selbsttätig in Zugrichtung ausrichtet und dadurch die Biegewinkel verkleinert. Indem die Lageranordnung ausgebildet ist, den ersten Anschlusskörper relativ zum zweiten Anschlusskörper in einem ersten Drehfreiheitsgrad, der senkrecht zur Auszugsrichtung orientiert ist, drehbeweglich zu führen und in einem zweiten Drehfreiheitsgrad, der senkrecht sowohl zur Auszugsrichtung als auch senkrecht zum ersten Drehfreiheitsgrad orientiert ist, in Abhängigkeit der Bewegung des ersten Anschlusskörpers um den ersten Drehfreiheitsgrad, zwangsgeführt zu lagern, kann die Leitungsführungsvorrichtung besonders gut dem ausgezogenen Leitungsabschnitt folgen. Dies verringert die Biegewinkel des Leitungsabschnitts im Austrittsbereich der Leitungsführungsvorrichtung zusätzlich und kann somit noch besser helfen, den Verschleiß der Versorgungsleitung zu reduzieren und die Lebensdauer der gesamten Leitungsführungsvorrichtung zu erhöhen.

Darüber hinaus wird nur eine geringere Auszugslänge benötigt, wenn die Orientierung der Leitungsführungsvorrichtung der momentanen Auszugsrichtung des Leitungsabschnitts folgen kann. Ausgehend vom Drehpunkt der Leitungsführungsvorrichtung, welcher beispielsweise im Bereich eines sphärischen Lagers der Lagerungsvorrichtung liegen kann, braucht der Leitungsabschnitt nicht mehr einem Knick im Bereich der Austrittsöffnung des Aufnahmeraums folgen, sondern kann auf einer geraden Linie geführt werden, so dass erforderliche Auszugslänge kleiner ist, wenn die Leitungsführungsvorrichtung in die momentane Auszugsrichtung gedreht ist. Dies entlastet auch die Federeinrichtung, die erforderlich ist, um den ausgezogenen Leitungsabschnitt wieder in den Aufnahmeraum zurückzuholen.

Insofern kann sich die Rückstellkraft in der Federeinrichtung insgesamt verringern.

Die Lageranordnung hat zunächst die Funktion die komplette Leitungsführungsvorrichtung an einem ausgewählten Glied des Roboterarms zu halten, so dass die Leitungsführungsvorrichtung von diesem Glied getragen wird. Die Leitungsführungsvorrichtung mach in ihrem an dem Roboterarm angebauten Zustand folglich die Bewegung desjenigen Gliedes des Roboterarms mit, an welchem die Leitungsführungsvorrichtung mittels der Lageranordnung befestigt ist. Darüber hinaus hat die Lageranordnung die Funktion eine Beweglichkeit der Leitungsführungsvorrichtung relativ zu demjenigen Glied des Roboterarms zu ermöglichen, an dem die Leitungsführungsvorrichtung mittels der Lageranordnung befestigt ist. Dabei ist der erste Drehfreiheitsgrad ein freier Drehfreiheitsgrad, so dass die Leitungsführungsvorrichtung aufgrund von äußeren Kräften, die auf die Leitungsführungsvorrichtung, insbesondere auf den Aufnahmeraum einwirken, eine relative Bewegung der Leitungsführungsvorrichtung bezüglich desjenigen Gliedes des Roboterarms erlaubt, an dem die Leitungsführungsvorrichtung mittels der Lageranordnung befestigt ist. Gleichzeitig weist die Lageranordnung einen zweiten Drehfreiheitsgrad auf, der in Abhängigkeit der Bewegung der Leitungsführungsvorrichtung um den ersten Drehfreiheitsgrad, jedoch zwangsgeführt ist. Dies bedeutet, dass die Leitungsführungsvorrichtung sich nicht frei um den zweiten Drehfreiheitsgrad drehen kann, sondern die Drehung der Leitungsführungsvorrichtung um den zweiten Drehfreiheitsgrad unmittelbar abhängig ist von der Drehstellung der Leitungsführungsvorrichtung um den ersten Drehfreiheitsgrad.

Da die Leitungsführungsvorrichtung, wenn sie mittels der erfindungsgemäßen Lagerungsvorrichtung an einem Glied des Roboterarms befestigt ist, eine Bewegung des Roboterarms im Raum mitmacht, ist es zweckmäßig den ersten Drehfreiheitsgrad, den zweiten Drehfreiheitsgrad und den dritten Drehfreiheitsgrad relativ zur Leitungsführungsvorrichtung bzw. insbesondere zur Auszugsrichtung des Leitungsabschnitts der Leitungsführungsvorrichtung zu definieren. Demgemäß kann ein entsprechendes Koordinatensystem seinen Ursprung an der erfindungsgemäßen Lagerungsvorrichtung aufweisen. Vorzugsweise kann dann der Ursprung des Koordinatensystems bezüglich des ersten Anschlusskörpers der Lagerungsvorrichtung fest sein. Alternativ kann ein anderes Koordinatensystem definiert sein, dessen Ursprung bezüglich des zweiten Anschlusskörpers der Lagerungsvorrichtung fest sein kann. Dann würde das Koordinatensystem auch fest bezüglich eines Gliedes des Roboterarms sein, an dem die Lagerungsvorrichtung befestigt ist.

Das kartesische Koordinatensystem weist drei orthogonal zueinander ausgerichtete Achsen auf, welche den drei Drehachsen der Drehfreiheitsgrade entsprechen, wobei die eine Achse in Auszugsrichtung des Leitungsabschnitts ausgerichtet ist. Die Auszugsrichtung ist dabei bestimmt durch die Zugrichtung, in welche der Leitungsabschnitt im Bereich der Austrittsöffnung der Leitungsführungsvorrichtung aus dem Aufnahmeraum der Leitungsführungsvorrichtung bauartbedingt herausgezogen wird.

Der erste Drehfreiheitsgrad ist demgemäß senkrecht zur Auszugsrichtung orientiert. Am Beispiel einer an einem Grundarm eines Roboterarms befestigten Leitungsführungsvorrichtung kann in einer Grundstellung des Roboterarms (z.B. Justageposition mit Achsstellung von -90 Grad am zweiten Gelenk und +90 Grad am dritten Gelenk des Roboterarms), in welcher der Grundarm des Roboterarms genau horizontal ausgerichtet ist, der erste Drehfreiheitsgrad im kartesischen Koordinatensystem als die vertikal ausgerichtete Z-Achse bezeichnet werden. Diese Z-Achse ist demgemäß in Schwerkraftrichtung ausgerichtet. Sie kann auch als die Gierachse bezeichnet werden. Der zweite Drehfreiheitsgrad kann demgemäß von einer senkrecht sowohl zum ersten Drehfreiheitsgrad (Z-Achse, Gierachse) als auch senkrecht zur Auszugsrichtung orientierten Achse gebildet werden, die im kartesischen Koordinatensystem als eine horizontale ausgerichtete Y-Achse bezeichnet werden. Diese Y-Achse kann auch als die Nickachse bezeichnet werden. Der verbleibende dritte Drehfreiheitsgrad ist demgemäß in Richtung der Auszugsrichtung orientiert, d.h. der dritte Drehfreiheitsgrad erstreckt sich in Auszugsrichtung. Dieser dritte Drehfreiheitsgrad kann im kartesischen Koordinatensystem als eine horizontale ausgerichtete X-Achse bezeichnet werden. Diese X-Achse kann auch als die Rollachse bezeichnet werden.

In einer solchen typischen Konfiguration ergibt eine freie, drehbewegliche Führung des ersten Drehfreiheitsgrads, dass die Leitungsführungsvorrichtung um die Z-Achse, d.h. die Gierachse seitlich frei ausschwenken kann, je nachdem, wohin der ausziehbare Leitungsabschnitt bei einer Bewegung des Roboterarms von dem Handflansch hingeführt wird. Aufgrund der Zwangsführung des zweiten Drehfreiheitsgrads stellt sich in Abhängigkeit der Schwenklage der Leitungsführungsvorrichtung um die Z-Achse eine fest zugeordnete Kippbewegung bzw. Nickbewegung der Leitungsführungsvorrichtung um die Y-Achse, d.h. um die Nickachse ein. Eine Änderung der Rollneigung um die X-Achse hätte in diesem Fall keine bedeutende funktionale Auswirkung auf das Ausziehen des Leitungsabschnitts aus dem Aufnahmeraum, da die X-Achse ja genau in Auszugsrichtung verläuft und somit allenfalls eine Torsion des Leitungsabschnitts bewirken würde. Andererseits kann eine zwangsgeführte Verstellung um X-Achse in anderen Fallgestaltungen durchaus sinnvoll sein, beispielsweise genau dann, wenn auftretende unerwünschte Torsionen in dem Leitungsabschnitt kompensiert werden sollen. Insofern kann in einem solchen Anwendungsfall der dritte Drehfreiheitsgrads auch mit dem zweiten Drehfreiheitsgrad vertauscht sein. In einer ersten Variante kann wahlweise entweder einzig der zweite Drehfreiheitsgrad oder einzig der dritte Drehfreiheitsgrad in Abhängigkeit des ersten Drehfreiheitsgrads zwangsgeführt sein. In einer zweiten Variante können sowohl der zweite Drehfreiheitsgrad als auch der dritte Drehfreiheitsgrad in Abhängigkeit des ersten Drehfreiheitsgrads beide gleichzeitig zwangsgeführt sein.

Der erste Anschlusskörper definiert in einem Zusammenbau von Leitungsführungsvorrichtung, erfindungsgemäßer Lagerungsvorrichtung und Roboterarm, die eindeutige Position und die jeweilige Lage der Leitungsführungsvorrichtung.

Der zweite Anschlusskörper definiert in einem Zusammenbau von Leitungsführungsvorrichtung, erfindungsgemäßer Lagerungsvorrichtung und Roboterarm, die eindeutige Position und die jeweilige Lage der Leitungsführungsvorrichtung zusammen mit der Lagerungsvorrichtung bezüglich des Glieds des Roboterarms, an dem die Leitungsführungsvorrichtung befestigt ist.

Die Lageranordnung kann generell ausgebildet sein den zweiten Anschlusskörper relativ zum ersten Anschlusskörper in allen drei Schubfreiheitsgraden fest zu lagern. Die drei Schubfreiheitsgrade bedeuten allgemein eine translatorische Beweglichkeit in X-Richtung, Y-Richtung und Z-Richtung im Falle eines kartesischen Koordinatensystems. Eine Beweglichkeit in X-Richtung, Y-Richtung und Z-Richtung wäre demgemäß hier also verhindert, d.h. nicht möglich.

Eine feste Lagerung des zweiten Anschlusskörpers relativ zum ersten Anschlusskörper in allen drei Schubfreiheitsgraden bedeutet, dass auch die Leitungsführungsvorrichtung bezüglich desjenigen Gliedes des Roboterarms, an dem die Leitungsführungsvorrichtung zu lagern ist, nicht aufgrund eines Ausziehens oder Einholens des Leitungsabschnitts linear verschoben werden kann. Die feste Lagerung des zweiten Anschlusskörpers relativ zum ersten Anschlusskörper in allen drei Schubfreiheitsgraden bedeutet im kartesischen Koordinatensystem, dass die Leitungsführungsvorrichtung, wenn sie mittels der Lagerungsvorrichtung an einem Glied des Roboterarms gelagert ist, weder in X-Richtung noch in Y-Richtung oder Z-Richtung linear verschoben werden kann. Die Leitungsführungsvorrichtung kann demgemäß lediglich Rotationen maximal um die drei Drehfreiheitsgrade ausführen.

Die Lageranordnung kann außerdem generell ausgebildet sein den ersten Anschlusskörper relativ zum zweiten Anschlusskörper in einem um die Auszugsrichtung drehenden dritten Drehfreiheitsgrad in Abhängigkeit der Bewegung des ersten Anschlusskörpers um den ersten Drehfreiheitsgrad zwangsgeführt zu lagern. Dies entspricht der bereits beschriebenen Variante, bei der sowohl der zweite Drehfreiheitsgrad als auch der dritte Drehfreiheitsgrad in Abhängigkeit des ersten Drehfreiheitsgrads beide gleichzeitig zwangsgeführt sind.

In einer ersten grundlegenden Ausführungsform kann die Lageranordnung als eine zwangsgeführte sphärische Drehführung ausgebildet sein. Mittels einer zwangsgeführte sphärische Drehführung kann insbesondere eine voneinander unabhängige konstruktive Bestimmung der Zwangsführung um einen zweiten Drehfreiheitsgrad und der Zwangsführung um einen dritten Drehfreiheitsgrad, jeweils in Abhängigkeit des ersten Drehfreiheitsgrads, durchgeführt werden.

Die zwangsgeführte sphärische Drehführung kann eine formschlüssige Zwangslaufsicherung aufweisen, die einerseits eine Führungsbahn abtastet, um in Abhängigkeit der momentanen Drehstellung des ersten Anschlusskörpers um den ersten Drehfreiheitsgrad eine zwangsgeführte korrespondierende Drehstellung des ersten Anschlusskörpers um den zweiten und/oder dritten Drehfreiheitsgrad zu erreichen. Andererseits kann diese formschlüssige Zwangslaufsicherung auch dazu dienen, eine Spielfreiheit zu erreichen, so dass eine hohe Laufgüte bzw. eine ruckfreie und/oder Stoßfreie Bewegung des ersten Anschlusskörpers und damit der Leitungsführungsvorrichtung sichergestellt ist.

Die zwangsgeführte sphärische Drehführung kann eine kollisionsfreie Führung der Leitungsführungsvorrichtung sicherstellen, wenn sich er Roboterarm bewegt, an dem die Leitungsführungsvorrichtung mittels der Lagerungsvorrichtung gelagert ist. Die zwangsgeführte sphärische Drehführung kann demgemäß eine Schwenkbewegung und/oder eine Kippbewegung ausführen, und zwar stets in Abhängigkeit der momentanen Drehstellung um den ersten Drehfreiheitsgrad. Demgemäß kann die Leitungsführungsvorrichtung eine überlagerte Gierbewegung, Nickbewegung und/oder Rollbewegung ausführen. Dabei kann konstruktiv sichergestellt sein, dass keine Berührung bzw. Kollision der Leitungsführungsvorrichtung mit dem Roboterarm stattfindet. Auch kann die insoweit aufgezwungene Bewegungsart der Leitungsführungsvorrichtung gegebenenfalls auch eine Kollision mit anderen Objekten, die sich beispielsweise in einem Arbeitsraum befinden, in welchem der Roboterarm sich bewegt, verhindern.

Die erfindungsgemäße Lageranordnung kann insbesondere aus handelsüblichen Maschinenelementen, vorzugsweise sogar Normteilen, zusammengestellt werden, was eine kostengünstige Herstellung ermöglicht und einen sicheren Betrieb gewährleisten kann. Sphärische Drehführungen können beispielsweise trockengeschmiert hergestellt sein, z.B. aus PTFE-Werkstoffen oder entsprechend mit PTFE-Werkstoffen beschichtet sein. So können die sphärischen Drehführungen insbesondere wartungsfrei arbeiten. Die Lageranordnung kann in verschiedenen Baugrößen hergestellt werden, insbesondere zur Anpassung an die Baugrößen der Roboterarme, und kann insbesondere baukastenartig klassierte Baugrößen umfassen.

Das Hauptgelenk kann ein mittig sitzendes Kugelgelenk mit einem Gelenkfreiheitsgrad f=3 umfassen. Um dieses Kugelgelenk können um 90° versetzt zueinander weitere Teilgelenke, beispielsweise zylindrische Rollen, mit einem jeweiligen Gelenkfreiheitsgrad f=4 angeordnet sein. Diese Teilgelenke können eine räumlich gekrümmte Führungskurve, d.h. die Führungsbahn abtasten. Die Führungskurve bzw. die Führungsbahn ist so ausgebildet, dass sich die Leitungsführungsvorrichtung kollisionsfrei um den Roboterarm bewegen kann. Durch gleichzeitiges Abtasten einer komplementären Kurve kann der insbesondere spielfreie Zwangslauf erreicht werden. Beispielsweise die Achsen von Rollen können sich in Zentrum des Kugelgelenkes schneiden. Zudem können die Achsen der Rollen jeweils paarweise miteinander fluchtend. Da sich alle Drehachsen in einem Punkt schneiden und die Bewegungsbahn von Gliedpunkten auf konzentrischen Kugelschalen liegen, ist dies eine sphärische Anordnung.

Das technische Prinzip ist vergleichbar mit der Abwicklung eines Kurvengetriebes, analog eines Stößelantriebs. Ein Stößel bzw. ein Abtaster tastet eine räumlich gekrümmte Kurve durch Kraftschluss oder Formschluss ab. Der Abtaster kann auch als ein Führungsbahnfolger bezeichnet werden.

Die Zwangslaufsicherung kann allgemein durch Kraftschluss, beispielsweise Federkraft, oder durch Formschluss, wie beispielsweise bei einer Nutkurve erreicht werden, oder durch gleichzeitiges Abtasten einer komplementären Kurve erzeugt werden. Bei einer Zwangslaufsicherung kann durch gleichzeitiges Abtasten einer komplementären Kurve Spielfreiheit erzielt werden. Diese Anordnung besitzt eine hohe Laufgüte, sie ist stoßfreie und ermöglicht eine ruckfreie Bewegung.

Ein erstes Paar von Teilgelenken bewirkt den Zwanglauf und das andere Paar von Teilgelenken bewirken die Zwangslaufsicherung.

Die Lageranordnung, insbesondere die zwangsgeführte sphärische Drehführung kann eine Taumel-Drehscheibe aufweisen, die mittels eines zentral angeordneten sphärischen Drehlagers mit drei Drehfreiheitsgraden an einem Gestell gelagert ist und umfangsseitig an einer mit dem Gestell verbundenen Umfangsführung zwangsgeführt gelagert ist.

Die Taumel-Drehscheibe kann unterschiedliche Gestalten aufweisen. Wesentliche Eigenschaft der Taumel-Drehscheibe ist ihre starre Gestalt in Verbindung mit dem zentral angeordneten sphärischen Drehlager und einer in einem Abstand von dem zentralen sphärischen Drehlager angeordnete Umfangsführung
Da das zentral angeordnete sphärische Drehlager drei Drehfreiheitsgrade aufweist und die Taumel-Drehscheibe lediglich in einem Drehfreiheitsgrad frei drehbar sein soll, müssen die anderen beiden Drehfreiheitsgrad zwangsgeführt werden, was durch die Umfangsführung erreicht wird. Die Umfangsführung kann zunächst unterschiedlich gestaltet sein und beispielsweise wenigstens einen Hebel an der Taumel-Drehscheibe aufweisen, der beispielsweise in einer über einem Umfang oder Teilumfang um das sphärische Drehlager geführte Ringnut oder Teilringnut zwangsgeführt ist.

Das zentral angeordnete sphärische Drehlager stützt sich gegen ein Gestell ab. Das Gestell bildet ein Widerlager für die Taumel-Drehscheibe und ist mit dem zweiten Anschlusskörper verbunden. Das Gestell lagert die Taumel-Drehscheibe insoweit relativ zu einem Glied des Roboterarms, wenn die Lagerungsvorrichtung mittels der Lageranordnung an diesem Glied des Roboterarms befestigt ist. Dann ist das Gestell, welches die Taumel-Drehscheibe lagert, starr mit diesem Glied des Roboterarms verbunden.

Die Taumel-Drehscheibe kann beispielsweise, wie später zu einem konkreten Ausführungsbeispiel noch detaillierter erläutert wird, eine kreuzförmige Gestalt aufweisen. Die Taumel-Drehscheibe kann demgemäß beispielsweise vier um jeweils 90 Grad zueinander versetzt angeordnete Arme aufweisen, die sich zumindest im Wesentlichen radial von dem zentral angeordnete sphärische Drehlager ausgehend nach außen wegerstrecken können. An einem jeweiligen freien Ende eines jeden Armes kann die zwangsgeführte Lagerung angeordnet sein.

Die Umfangsführung kann eine mit dem Gestell verbundene Führungsbahn aufweisen, auf welcher sich wenigstens ein Führungsbahnfolger bewegt, der mit der Taumel-Drehscheibe verbunden ist.

Im Falle eines einzelnen Führungsbahnfolgers kann dieser eine Laufrolle aufweisen, welche in eine umlaufende Nut eingreift.

Dabei kann eine obere Wand der Nut eine obere Führungsbahn bildet, welche die Laufrolle an ihrer Oberseite berührt und eine untere wand der Nut kann eine untere Führungsbahn bilden, welche die Laufrolle an ihrer Unterseite berührt bzw. die Laufrolle wälzt auf der untere Führungsbahn ab und kann nach oben hin nicht ausweichen, weil die obere Wand der Nut eine Bewegung der Laufrolle nach oben verhindert.

Alternativ kann die entsprechende Zwangsführung auch dadurch erreicht werden, dass die Taumel-Drehscheibe zwei gegenüberliegende, voneinander sich wegerstreckende Arme aufweist, die jeweils mit einer Laufrolle ausgestattet sind. Jede der beiden Laufrollen läuft dabei auf einer eigenen Führungsbahn. Die erste Laufrolle läuft auf einer ersten Führungsbahn einer ersten Kontur, welche die Bewegung der Taumel-Drehscheibe um den zwangsgeführten (zweiten) Drehfreiheitsgrad bestimmt. Die gegenüberliegende zweite Laufrolle läuft auf einer zweiten Führungsbahn einer zweiten Kontur, welche zur ersten Kontur der ersten Führungsbahn punktsymmetrisch gespiegelt ausgebildet ist. Durch das Abstützen der zweiten Laufrolle auf der zweiten Führungsbahn ist ein Abheben der ersten Laufrolle von der ersten Führungsbahn verhindert. In dieser Weise ist eine Zwangsführung beispielsweise um den zweiten Drehfreiheitsgrad sichergestellt.

Soll eine Zwangsführung auch für den dritten Drehfreiheitsgrad sichergestellt werden, so kann dies dadurch erreicht werden, dass die Taumel-Drehscheibe zwei gegenüberliegende, voneinander sich wegerstreckende zusätzliche Arme aufweist, die jeweils mit einer zusätzlichen Laufrolle ausgestattet sind. Jede der beiden Laufrollen läuft dabei auf einer eigenen Führungsbahn. Die insoweit dritte Laufrolle läuft auf einer dritten Führungsbahn einer dritten Kontur, welche die Bewegung der Taumel-Drehscheibe um den zwangsgeführten (dritten) Drehfreiheitsgrad bestimmt. Die der dritten Laufrolle gegenüberliegende vierte Laufrolle läuft auf einer vierten Führungsbahn einer vierten Kontur, welche zur dritten Kontur der dritten Führungsbahn punktsymmetrisch gespiegelt ausgebildet ist. Durch das Abstützen der vierten Laufrolle auf der vierten Führungsbahn ist ein Abheben der dritten Laufrolle von der dritten Führungsbahn verhindert. Wird eine sich ändernde Zwangsführung, d.h. eine zwangsgeführte Bewegung um den dritten Drehfreiheitsgrad nicht benötigt, können sowohl die dritte Führungsbahn als auch die vierte Führungsbahn eben ausgebildet sein und sich in derselben Ebene erstrecken.

Der wenigstens eine Führungsbahnfolger kann somit eine Laufrolle umfassen, welche an der Taumel-Drehscheibe drehbar gelagert ist und welche auf der Führungsbahn abwälzt.

Jeder Führungsbahnfolger kann also eine Laufrolle aufweisen. Die jeweilige Laufrolle ist vorzugsweise antriebslos ausgebildet. Die Laufrolle kann auch als Stützrolle bezeichnet werden. Sie kann einen Laufrollenträger umfassen, beispielsweise mit zwei gegenüberliegenden Laschen, an denen eine Steckachse zweiseitig gelagert ist, auf der die Laufrolle aufgesteckt und dort drehbar gelagert ist. Zwischen der Steckachse und der Laufrolle kann ein Wälzlager eingefügt sein. Alternativ kann die Laufrolle gleitgelagert sein. Die Lauffläche der Laufrolle bildet mit der jeweiligen Führungsbahn eine Wälzpaarung.

Die Taumel-Drehscheibe kann einen ersten Führungsbahnfolger aufweisen, der sich auf einem ersten Bahnabschnitt der Führungsbahn bewegt und die Taumel-Drehscheibe kann dabei einen dem ersten Führungsbahnfolger gegenüberliegend angeordneten zweiten Führungsbahnfolger aufweisen, der sich auf einem zweiten Bahnabschnitt der Führungsbahn bewegt, wobei der Bahnverlauf des ersten Bahnabschnitts komplementär zum Bahnverlauf des zweiten Bahnabschnitts ausgebildet ist, derart, dass ein spielfreies Drehen der Taumel-Drehscheibe um den zweiten Drehfreiheitsgrad erfolgt, wenn sich die Taumel-Drehscheibe um den ersten Drehfreiheitsgrad dreht.

Bei einer speziellen Ausführungsvariante mit lediglich einem ersten Führungsbahnfolger und einem zweiten Führungsbahnfolger kann die Taumel-Drehscheibe ausgebildet sein, ein Drehen um den dritten Drehfreiheitsgrad nicht zuzulassen, d.h. konstruktiv zu verhindern bzw. zu sperren. Dazu kann die Taumel-Drehscheibe zwar einen dritten Führungsbahnfolger aufweisen, der sich auf einem dritten Bahnabschnitt der Führungsbahn bewegt und einen dem dritten Führungsbahnfolger gegenüberliegend angeordneten vierten Führungsbahnfolger aufweisen, der sich auf einem vierten Bahnabschnitt der Führungsbahn bewegt. Allerdings sind in dieser speziellen Ausführungsvariante der dritte Bahnabschnitt und der vierte Bahnabschnitt als ebene Bahnen ausgebildet, die vorzugsweise beide in derselben Raumebene liegen und diese Raumebene beispielsweise parallel zur Auszugsrichtung (X-Achse) und parallel zur Nickachse (Y-Achse) ausgerichtet ist. Anders ausgedrückt erstrecken sich die ebenen Bahnen des dritten Bahnabschnitts und des vierten Bahnabschnitts zumindest im Wesentlichen senkrecht zur Gierachse (Z-Achse). In dieser eingeschränkten Beweglichkeit der Taumel-Drehscheibe kann die Leitungsführungsvorrichtung somit ausschließlich eine Rotation um die Gierachse (Z-Achse) ausführen und in dessen Abhängigkeit zwangsgeführt, ausschließlich eine Rotation um die Nickachse (Y-Achse) ausführen. Die Leitungsführungsvorrichtung bleibt folglich im Hinblick auf eine Rollbewegung, d.h. einer Rotation um die Auszugsrichtung (X-Achse) konstant.

Demgemäß kann alternativ oder ergänzend die Taumel-Drehscheibe einen dritten Führungsbahnfolger aufweisen, der sich auf einem dritten Bahnabschnitt der Führungsbahn bewegt und die Taumel-Drehscheibe kann dabei einen dem dritten Führungsbahnfolger gegenüberliegend angeordneten vierten Führungsbahnfolger aufweisen, der sich auf einem vierten Bahnabschnitt der Führungsbahn bewegt, wobei der Bahnverlauf des dritten Bahnabschnitts komplementär zum Bahnverlauf des vierten Bahnabschnitts ausgebildet ist, derart, dass ein spielfreies Drehen der Taumel-Drehscheibe um den dritten Drehfreiheitsgrad erfolgt, wenn sich die Taumel-Drehscheibe um den ersten Drehfreiheitsgrad dreht.

In Abwandlung zu einer gesperrten Rollbewegung, d.h. einer Rotation um die Auszugsrichtung (X-Achse), wie oben beschrieben, können jedoch in einer anderen Ausführung der dritte Bahnabschnitt und der vierte Bahnabschnitt einen von dem ebenen Verlauf abweichenden, insbesondere gekrümmten Verlauf aufweisen. Ein solcher gekrümmter Verlauf des dritten Bahnabschnitts und des vierten Bahnabschnitts hat dann zur Folge, dass die Taumel-Drehscheibe und somit auch die Leitungsführungsvorrichtung eine zwangsgeführte Rotation um die Auszugsrichtung (X-Achse) ausführen kann, wenn sich die Taumel-Drehscheibe um den ersten Drehfreiheitgrad dreht.

In einer ersten Variante kann die Taumel-Drehscheibe insgesamt drei Führungsbahnfolger aufweisen, von denen sich jeder auf einem Bahnabschnitt von insgesamt drei Bahnabschnitten der Führungsbahn bewegt. Die drei Führungsbahnfolger können mit ihren Drehachsen dann insbesondere jeweils um 120 Grad versetzt zueinander orientiert angeordnet sein.

In einer zweiten Variante kann die Taumel-Drehscheibe insgesamt vier Führungsbahnfolger aufweisen, von denen sich jeder auf einem Bahnabschnitt von insgesamt vier Bahnabschnitten der Führungsbahn bewegt. Die vier Führungsbahnfolger können mit ihren Drehachsen dann insbesondere jeweils um 90 Grad versetzt zueinander orientiert angeordnet sein.

In einer dritten Variante kann die Taumel-Drehscheibe insgesamt fünf Führungsbahnfolger aufweisen, von denen sich jeder auf einem Bahnabschnitt von insgesamt fünf Bahnabschnitten der Führungsbahn bewegt. Die fünf Führungsbahnfolger können mit ihren Drehachsen dann insbesondere jeweils um 72 Grad versetzt zueinander orientiert angeordnet sein.

Die Bewegungs- bzw. Führungsbahnen müssen nicht punktsymmetrisch zueinander sein. Auch der jeweilige Radius bzw. der Abstand zwischen den Teilgelenken, d.h. den Führungsbahnfolgern, den Bahnabschnitten bzw. den Rollen und dem zentralen Hauptgelenk (Kugelgelenk) muss nicht gleich sein. Gleiche Radien bzw. gleiche Abstände vereinfachen zwar die Konstruktion und die Herstellung, aber zwingend ist das nicht. Die Führungsbahnen müssen hingegen aufeinander abgestimmt sein. Wichtig ist auch die grundsätzlich sphärische Anordnung, so dass sich alle Achsen im Drehzentrum schneiden.

Die Führungsbahn kann wenigstens einen Rastanschlag aufweisen, der ausgebildet ist, eine Drehbewegung der Taumel-Drehscheibe um den ersten Drehfreiheitsgrad auf einen Drehwinkel von weniger als 90 Grad zu begrenzen.

Der wenigstens eine Rastanschlag kann durch eine konkave Vertiefung in der jeweiligen Führungsbahn gebildet werden, auf welcher die jeweilige Laufrolle abwälzt. Die konkave Vertiefung kann an den Durchmesser der Laufrolle angepasst sein. Alternativ kann der Rastanschlag von einem Vorsprung oder Rücksprung in der jeweiligen Führungsbahn gebildet werden, der ein weiteres Abwälzen der Laufrolle auf der Führungsbahn verhindert, indem die Laufrolle an dem Vorsprung anschlägt oder in den Rücksprung eintaucht.

Die Führungsbahn kann in allen Ausführungsvarianten mittels lösbarer Befestigungsmittel austauschbar an dem Gestell befestigt sein.

Aufgrund einer solchen lösbaren Befestigung der Führungsbahn bzw. der Führungsbahnabschnitte kann eine in einer ersten Gestalt konturierte erste Führungsbahn durch eine verschiedene zweite Führungsbahn ersetzt werden, die eine zur ersten Gestalt unterschiedliche zweite Gestalt aufweist. So kann das zwangsgeführte Bewegungsverhalten der Taumel-Drehscheibe und folglich das zwangsgeführte Bewegungsverhalten der Leitungsführungsvorrichtung bedarfsweise geändert werden. Eine solche bedarfsweise Änderung des Bewegungsverhaltens kann beispielsweise erforderlich sein, wenn das Roboterprogramm geändert ist und somit der Roboterarm eine andere Bewegung ausführt, das von der Leitungsführungsvorrichtung versorgte Werkzeug, welches von dem Roboterarm gehandhabt wird, geändert wird oder der Roboterarm in einem geänderten Arbeitsumfeld arbeiten soll.

Die lösbaren Befestigungsmittel können insbesondere Befestigungsmittel sein, die mittels Handwerkzeugen von einem Monteur gelöst bzw. angezogen werden können. So können die lösbaren Befestigungsmittel beispielsweise Schrauben sein, oder Stehbolzen in Verbindung mit Muttern.

In einer zweiten grundlegenden Ausführungsform kann die Lageranordnung als ein räumliches Koppelgetriebe ausgebildet sein. Mittels eines räumlichen Koppelgetriebes kann insbesondere eine gemeinsame konstruktive Bestimmung der Zwangsführung um einen zweiten Drehfreiheitsgrad und der Zwangsführung um einen dritten Drehfreiheitsgrad, jeweils in Abhängigkeit des ersten Drehfreiheitsgrads, durchgeführt werden.

Die zweite grundlegende Ausführungsform einer Lagerungsvorrichtung bzw. einer Lageranordnung kann einen Kipprahmen aufweisen. Der Kipprahmen entspricht funktional insofern der Taumel-Drehscheibe gemäß der ersten grundlegenden Ausführungsform einer Lagerungsvorrichtung bzw. einer Lageranordnung. Der Kipprahmen kann wahlweise aus starren Steben gebildet werden oder als ein Festkörper ausgebildet sein. In Falle eines Festkörpers kann der Kipprahmen insofern auch eine Platte bzw. ein flächiges Blech sein. Der Kipprahmen ist über das räumliche Koppelgetriebe an dem Gestell der Lagerungsvorrichtung gelagert.

Die Lageranordnung, insbesondere das räumliche Koppelgetriebe kann einen Kipprahmen aufweisen, der an einem ersten Endabschnitt des Kipprahmens mittels eines sphärischen Drehlagers mit drei Drehfreiheitsgraden an einem Gestell gelagert ist und an einem dem ersten Endabschnitt des Kipprahmens gegenüberliegenden zweiten Endabschnitt des Kipprahmens mittels eines Gelenkvierecks an dem Gestell gelagert ist.

Das sphärische Drehlager kann auch als Kugelgelenk bezeichnet werden. Das sphärische Drehlager, d.h. das Kugelgelenk zeichnet sich dadurch aus, dass es Rotationen in allen drei Drehfreiheitsgraden (kartesisches Koordinatensystem) zulässt, aber alle drei Schubfreiheitsgrade (lineare X-Richtung, lineare Y-Richtung und lineare Z-Richtung,) sperrt. Das sphärische Drehlager kann an dem Kipprahmen in einer solchen Position angeordnet sein, dass es bei befestigter Anordnung der Leitungsführungsvorrichtung auf dem Kipprahmen zumindest im Wesentlich unterhalb eines bezüglich der Auszugsrichtung rückseitigen Endes des Aufnahmeraums für den Leitungsabschnitt der Leitungsführungsvorrichtung positioniert ist.

Das Gelenkviereck kann eine Gelenksebene aufspannen, die zumindest im Wesentlichen senkrecht zur Auszugsrichtung des Leitungsabschnitts der Leitungsführungsvorrichtung aus dem Aufnahmeraum orientiert ist, wenn die Leitungsführungsvorrichtung auf dem Kipprahmen befestigt ist. Die Gelenksebene des Gelenkvierecks befindet sich vorzugsweise auf einer mittleren Höhe der Längserstreckung des Aufnahmeraums der Leitungsführungsvorrichtung. Die Längserstreckung des Aufnahmeraums entspricht der Auszugsrichtung des Leitungsabschnitts.

Das Gelenkviereck umfasst insgesamt vier sphärische Drehgelenke. Ein erstes sphärisches Drehgelenk verbindet ein erstes Koppelglied mit dem Kipprahmen. Ein zweites sphärisches Drehgelenk verbindet das erste Koppelglied mit dem Gestell. Ein drittes sphärisches Drehgelenk verbindet den Kipprahmen mit einem zweiten Koppelglied. Ein viertes sphärisches Drehgelenk verbindet das zweite Koppelglied mit dem Gestell. Das zweite sphärische Drehgelenk und das vierte sphärische Drehgelenk sind voneinander beabstandet angeordnet. Ebenso sind das erste sphärische Drehgelenk und das dritte sphärische Drehgelenk voneinander beabstandet angeordnet. Der Abstand des zweiten sphärischen Drehgelenks von dem vierten sphärischen Drehgelenk kann insbesondere geringer sein als der Abstand des ersten sphärischen Drehgelenks von dem dritten sphärischen Drehgelenk.

Das Gelenkviereck kann eine erste Koppelstange umfassen, an deren distalem erstem Stangenende ein die erste Koppelstange an den Kipprahmen ankoppelndes erstes sphärische Drehgelenk angeordnet ist und an deren proximalem zweiten Stangenende ein die erste Koppelstange an das Gestell ankoppelndes zweites sphärische Drehgelenk angeordnet ist, und das Gelenkviereck kann dabei eine zweite Koppelstange umfassen, an deren distalem dritten Stangenende ein die zweite Koppelstange an den Kipprahmen ankoppelndes drittes sphärische Drehgelenk angeordnet ist und an deren proximalem vierten Stangenende ein die zweite Koppelstange an das Gestell ankoppelndes viertes sphärische Drehgelenk angeordnet ist.

Das Gelenkviereck kann speziell als eine symmetrische Doppelschwinge ausgebildet sein. Das Gelenkviereck kann jedoch, je nach gewünschtem Bewegungsverhalten für die Leitungsführungsvorrichtung, auch als eine andere Unterart von Gelenkviereck ausgebildet sein. Das Gelenkviereck kann demgemäß statt nicht umlauffähig, gegebenenfalls auch umlauffähig oder sogar durchschlagend ausgebildet sein. So könnte das Gelenkviereck in Abwandlung zu der in den Ausführungsbeispielen näher erläuterten Versionen von symmetrischen Doppelschwingen, alternativ auch als Kurbelschwinge, zentrische Kurbelschwinge, Doppelkurbel, Parallelkurbelgetriebe, gegenläufiges Zwillingskurbelgetriebe, gleichschenklige Kurbelschwinge oder gleichschenklige Doppelkurbel ausgebildet sein, wenn dies für den jeweiligen Anwendungsfall sinnvoll und technisch umsetzbar ist. Gleiches gilt für die absoluten Abmessungen der Längen von Koppelstangen und der Abstände der Lagerstellen voneinander.

In dieser Ausführungsform wird das erste Koppelglied von einer ersten Koppelstange gebildet und das zweite Koppelglied von einer zweiten Koppelstange gebildet. Proximal bedeutet, dass das betreffende Stangenende dem Gestell zugewandt ist, also näher an dem Roboterarm liegt. Distal bedeutet, dass das betreffende Stangenende dem Kipprahmen zugewandt ist, also weiter weg von dem Roboterarm liegt, d.h. näher an der Leitungsführungsvorrichtung liegt. Sowohl die erste Koppelstange als auch die zweite Koppelstange sind starr ausgebildet. Insbesondere haben die erste Koppelstange und die zweite Koppelstange gleiche wirksame Baulängen.

Das erste sphärische Drehgelenk und das zweite sphärische Drehgelenk der ersten Koppelstange, sowie das dritte sphärische Drehgelenk und das vierte sphärische Drehgelenk der zweiten Koppelstange können als Gelenkköpfe ausgebildet sein. Die Gelenkköpfe können insbesondere nach DIN ISO 12240-4 ausgeführt sein. Das erste sphärische Drehgelenk und das zweite sphärische Drehgelenk der ersten Koppelstange, sowie das dritte sphärische Drehgelenk und das vierte sphärische Drehgelenk der zweiten Koppelstange bilden insoweit Kugelgelenke.

Das zweite sphärische Drehgelenk der ersten Koppelstange und das vierte sphärische Drehgelenk der zweiten Koppelstange können in einem geringeren Abstand voneinander positioniert an dem Gestell angeordnet sein, als das erste sphärische Drehgelenk der ersten Koppelstange und das dritte sphärische Drehgelenk der zweiten Koppelstange an dem Kipprahmen voneinander beabstandet angeordnet sind.

Im Sinne eines Gelenkvierecks kann die eine Koppelstange als antreibende Kurbel betrachtet werden und die andere Koppelstange als angetriebene Schwinge betrachtet werden. Der Kipprahmen bildet insoweit die Koppel, welche die eine Koppelstange mit der anderen Koppelstange gelenkig verbindet. Der Winkel zwischen Koppelstange und Koppel, d.h. Kipprahmen sollte vorzugsweise mindestens 40 Grad betragen. Dieser Winkel wird auch als Übertragungswinkel bezeichnet. Die Bewegungsgüte ist abhängig vom minimalen Übertragungswinkel. Dieser Winkel ist der spitze Winkel zwischen Absolutbahntangente und Relativbahntangente im Kraftübertragungspunkt zwischen Übertragungsglied, d.h. der Koppelstange, und dem Abtriebsglied, das angenommen von dem Kipprahmen gebildet wird. Klassisch wird eine Schwinge bzw. eine Kurbel als Antriebsglied und die Schwinge als Abtriebsglied verwendet. Der zulässige Übertragungswinkel sollte für diesen Fall größer als 40 Grad sein, um Blockierungen und Verklemmen oder Sperrstellungen zu vermeiden. Dieses Prinzip ist für die vorliegende Lageranordnung genauso anwendbar, obwohl keine der Koppelstangen aktiv angetrieben ist. Bei der vorliegenden Lageranordnung bilden weder Kurbel noch Schwinge einen Antrieb. Für die vorliegende Lageranordnung ist die Leitungsführungsvorrichtung fest auf der Koppel, d.h. auf dem Kipprahmen montiert, d.h. das Koppelglied wird durch die Eigenbewegung des Schlauchpaketes angetrieben.

Das Gelenkviereck ist insoweit nicht umlauffähig, was jedoch weder erforderlich noch gewünscht ist.

Das Gelenkviereck trägt den Kipprahmen in einem mittleren Bereich, so dass auch die Leitungsführungsvorrichtung etwa mittig von dem Gelenkviereck abgestützt wird. Das sphärische Drehlager befindet sich hingegen im Bereich eines rückwärtigen Endes des Kipprahmens bzw. der Leitungsführungsvorrichtung, also dort wo der Energieleitungsstrang der Leitungsführungsvorrichtung in den Aufnahmeraum der Leitungsführungsvorrichtung hineingeführt ist.

Das sphärische Drehlager kann in einem Abstand von einer Austrittsöffnung des Aufnahmeraums angeordnet sein, der um das Zweifache bis Dreifache größer ist, als der Abstand des Gelenkvierecks von dem sphärischen Drehlager. Dadurch wird ein ausgewogenes Verhältnis der Lagerreaktionen einerseits in dem sphärischen Drehlager und andererseits in dem Gelenkviereck erreicht. Je näher das sphärische Drehlager und das Gelenkviereck beieinander liegen und je weiter die Austrittsöffnung von dem Gelenkviereck entfernt ist, umso größer werden die Lagerkräfte. Wenn das Gelenkviereck jedoch sehr weit weg von dem sphärischen Drehlager positioniert wird und gleichzeitig das Gelenkviereck dadurch sehr nahe an die Austrittsöffnung gebracht wird, verringert sich die Beweglichkeit der Leitungsführungsvorrichtung. Wenn das sphärische Drehlager in einem Abstand von der Austrittsöffnung des Aufnahmeraums angeordnet ist, der in einem Bereich liegt, der um das Zweifache bis Dreifache größer ist als der Abstand des Gelenkvierecks von dem sphärischen Drehlager, wird ein ausgewogenes Verhältnis von Beweglichkeit zu Lagerbelastungen erreicht.

Die Lagerungsvorrichtung umfasst ein Gestell, das in der einfachsten Ausführungsform durch ein ebenes Blech gebildet werden kann. Dieses Gestell kann mit dem zweiten Anschlusskörper verbunden sein oder den zweiten Anschlusskörper unmittelbar bilden. An einer Oberseite des Gestells ist sowohl das sphärische Drehlager als auch das Gelenkvierecks angeordnet. Der Kipprahmen ist mittels des sphärische Drehlagers und des Gelenkvierecks bezüglich des Gestells wie beschrieben drehbeweglich und zwangsgeführt gelagert. Der Kipprahmen trägt die Leitungsführungsvorrichtung. Der Kipprahmen kann insoweit mit dem ersten Anschlusskörper verbunden sein oder den ersten Anschlusskörper unmittelbar bilden.

In einer Grundstellung des Kipprahmens ist dieser mit seiner Haupterstreckungsebene parallel zur Haupterstreckungsebene des Gestells ausgerichtet. Dies entspricht auch einer Grundstellung der Leitungsführungsvorrichtung, wenn diese auf dem Kipprahmen befestigt ist. In einer Grundstellung des Roboterarms ist beispielsweise ein Armausleger des Roboterarms horizontal ausgerichtet. Wenn die Lagerungsvorrichtung und somit auch die Leitungsführungsvorrichtung an dem Armausleger des Roboterarms angebracht ist, erstreckt sich der Kipprahmen in seiner Grundstellung auch in einer horizontalen Ebene. Demgemäß erstreckt sich die Leitungsführungsvorrichtung dann auch in einer horizontalen Ebene. Dies bedeutet folglich, dass in der Grundstellung auch die Auszugsrichtung der Leitungsführungsvorrichtung horizontal verläuft.

Wird nun durch eine ziehende Bewegung, ausgelöst durch eine Bewegung der Roboterhand im Raum, welche das frontseitige Ende der Leitung führt, der Leitungsabschnitt aus dem Aufnahmeraum schräg zur Auszugsrichtung der Leitungsführungsvorrichtung herausgezogen, wirken laterale Kräfte auf das Gehäuse der Leitungsführungsvorrichtung, so dass diese sich aufgrund des freien ersten Drehfreiheitsgrades der Lagerungsvorrichtung seitlich wegdrehen kann, was aufgrund des zwangsgeführten zweiten Drehfreiheitsgrades und/oder dritten Drehfreiheitsgrades unmittelbar bewirkt, dass der Kipprahmen und somit auch die Leitungsführungsvorrichtung sich nach unten neigt und/oder sich axial verdreht. Dies entspricht dann einem Nicken bzw. einem Rollen der Leitungsführungsvorrichtung, das sich der Schwenkbewegung der Leitungsführungsvorrichtung überlagert.

Das Gelenkviereck kann eine Federeinrichtung aufweisen, die ausgebildet ist, den Kipprahmen bezüglich des Gestells in einer mittleren Grundstellung zu halten, wenn keine äußeren Kräfte auf die Lagerungsvorrichtung einwirken.

Wenn durch eine entlastende Bewegung der Roboterhand im Raum, welche das frontseitige Ende der Leitung führt, der Leitungsabschnitt wieder in den Aufnahmeraum entgegen der Auszugsrichtung der Leitungsführungsvorrichtung hineingezogen wird, wirken keine lateralen Kräfte mehr auf das Gehäuse der Leitungsführungsvorrichtung oder zumindest wirken nur noch geringere laterale Kräfte auf das Gehäuse der Leitungsführungsvorrichtung. In diesem Fall kann es gewünscht sein, dass sich die Leitungsführungsvorrichtung wieder selbsttätig in ihre Ausgangsstellung, d.h. ihre Grundstellung zurückbewegt. Diese Funktion kann durch die Federeinrichtung bewirkt werden. Die Federeinrichtung wirkt insoweit auf das Gelenkviereck ein, um es in seine Grundstellung zurückzubewegen. Die Grundstellung des Gelenkvierecks entspricht demgemäß der Grundstellung des Kipprahmens und damit der Grundstellung der Leitungsführungsvorrichtung.

Die Federeinrichtung kann eine Druckfeder oder mehrere Druckfedern aufweisen. Alternativ oder ergänzend kann die Federeinrichtung eine Zugfeder oder mehrere Zugfedern aufweisen. Beispielsweise kann die Federeinrichtung von zwei einzelnen Zugfedern gebildet werden. Jeweils eine Zugfeder ist einem der beiden Koppelstangen zugeordnet. Die jeweilige Zugfeder greift einerseits an einer Stelle des Gestells der Lagerungsvorrichtung an und andererseits an einer Stelle des Kipprahmens. Die Stellen, an denen die Zugfeder am Gestell und am Kipprahmens angreifen, sind so gewählt, dass sie in einem aus der Grundstellung des Kipprahmens ausgelenkten Stellung der zugeordneten Koppelstange ein rückstellendes Moment auf den Kipprahmen ausüben. Die beiden Zugfedern können am Kipprahmen an einer gemeinsamen Stelle angreifen, insbesondere in einem mittleren Bereich zwischen dem ersten sphärischen Drehgelenk und dem dritten sphärischen Drehgelenk.

Das sphärische Drehlager kann einen Kugelkopf umfassen, welcher in einer Kugelpfanne drehbar geführt ist, derart, dass der Kugelkopf um Kippwinkel bis zu 40 Grad abkippbar gelagert ist.

Der Kugelkopf des sphärischen Drehlagers kann einen Kugelzapfen aufweisen, der in seiner Einbaulage an der Lagerungsvorrichtung in seiner Grundstellung zumindest im Wesentlichen senkrecht zur Erstreckungsebene des Gestells der Lageranordnung und/oder senkrecht zur Erstreckungsebene des Kipprahmens der Lageranordnung angeordnet ist. In einer solchen Einbaulage entspricht die Rotationsachse des Kugelkopfes um die axiale Erstreckung des Kugelzapfens dem Schwenken der Leitungsführungsvorrichtung um den ersten Drehfreiheitsgrad bzw. um die Z-Achse, d.h. um die Gierachse der Leitungsführungsvorrichtung. Dies stellt eine maximale Schwenkbarkeit der Leitungsführungsvorrichtung um seine Gierachse sicher. Demgemäß kann der zweite Drehfreiheitsgrad und gegebenenfalls der dritte Drehfreiheitsgrad aufgrund des begrenzten Kippwinkels des Kugelkopfs auf maximal 40 Grad begrenzt sein.

Das erste sphärische Drehgelenk, das zweite sphärische Drehgelenk, das dritte sphärische Drehgelenk und das vierte sphärische Drehgelenk können generell als Gelenkköpfe ausgebildet sein. Die Gelenkköpfe können insbesondere nach DIN ISO 12240-4 ausgeführt sein.

So kann jede Koppelstange zwei Gelenkköpfe aufweisen, wobei die beiden Gelenkkopfzapfen gegenüberliegend und aufeinander zuweisend über eine Stange oder eine Hülse verbunden sind. An dem jeweiligen Gelenkkopfzapfen ist ein ringförmiges Außenteil befestigt oder angeformt. Das ringförmige Außenteil kann einen Sitz für eine Lagerschale aufweisen und direkt eine kalottenförmige Innengleitfläche für den Kugelkopf aufweisen. Der Kugelkopf kann gegenüberliegend abgeschnitten ausgebildet sein und beispielsweise eine Bohrung umfassen, welche einen Anschluss bildet, um den jeweiligen Kugelkopf an dem Gestell bzw. an dem Kipprahmen befestigen zu können. Der Kugelkopf kann insoweit von einem Innenring mit einer kugelabschnittsförmigen Außenumfangswand und einer kreiszylindrischen Innenumfangswand gebildet werden.

Die Aufgabe wird auch gelöst durch einen Roboterarm, aufweisend mehrere Glieder und die Glieder gegeneinander verstellende Gelenke, sowie eine Leitungsführungsvorrichtung, die einen Aufnahmeraum aufweist, in dem ein Leitungsabschnitt einer Energiezuführungsleitung in einer Auszugsrichtung ausziehbar gelagert ist, zum Führen der Energiezuführungsleitung entlang mehrerer der Glieder des Roboterarms, wobei der Roboterarm eine Lagerungsvorrichtung, wie nach einem oder mehreren der beschriebenen Ausführungen erläutert, aufweist, welche die Leitungsführungsvorrichtung, insbesondere ein Gehäuse der Leitungsführungsvorrichtung in zwei verschiedenen, jeweils senkrecht zur Auszugsrichtung des Leitungsabschnitts der Energiezuführungsleitung orientierten Drehfreiheitsgraden zwangsgekoppelt beweglich an einem Glied des Roboterarms lagert.

Die Leitungsführungsvorrichtung kann ein Gehäuse aufweisen; eine durch das Gehäuse in seiner axialen Längserstreckung von einem hinteren Stirnende zu einem vorderen Stirnende hindurchgeführte Versorgungsleitung aufweisen, sowie eine innerhalb des Gehäuses angeordnete Federvorrichtung aufweisen, die ausgebildet ist, die Versorgungsleitung mittels Federkraft selbsttätig aus einem ausgezogenen Zustand der Versorgungsleitung in einen eingezogenen Zustand der Versorgungsleitung zurückzuführen, und die einen in Auszugsrichtung der Versorgungsleitung vorderen Endabschnitt und einen in Auszugsrichtung der Versorgungsleitung hinteren Endabschnitt aufweist, und einen mit der Versorgungsleitung fest verbundenen Federvorrichtungssitz, an dem der hintere Endabschnitt der Federvorrichtung gelagert ist, und einen mit dem Gehäuse verbundenen Gegenlagersitz, an dem der vordere Endabschnitt der Federvorrichtung gelagert ist.

Die Leitungsführungsvorrichtung zum Führen mindestens einer Versorgungsleitung entlang eines Roboterarms wird im Allgemeinen dann eingesetzt, wenn Versorgungsmedien über die Struktur des Roboterarms hinweg beispielsweise an ein vom Roboterarm gehaltenes und geführtes Werkzeug herangebracht werden sollen. Dabei soll einerseits die Versorgungsleitung möglichst nahe der Struktur des Roboterarms verlaufen, um u.a. die Störkontur des Roboterarms möglichst wenig zu vergrößern. Andererseits kann die Versorgungsleitung nicht über ihre gesamte Länge fest an dem Roboterarm verlaufen, da eine gewisse Reservelänge für die Versorgungsleitung notwendig ist, da der Roboterarm das Werkzeug mitunter auch umorientiert und dabei Gelenkbewegungen ausführt, denen die Versorgungsleitung störungsfrei und spannungsfrei folgen können muss. Daher ist an der Leitungsführungsvorrichtung eine gewisse Reservelänge für die Versorgungsleitung vorzusehen, wobei diese Reservelänge dennoch nicht weit vom Roboterarm herunterhängen oder abstehen soll, sondern dennoch konturnahe an dem Roboterarm entlang verlaufen soll, zumindest im vorderen Bereich des Roboterarms, d.h. im Bereich dessen Handgelenke, also zwischen der Leitungsführungsvorrichtung und dem Werkzeug.

Die Leitungsführungsvorrichtung ist zumindest im Wesentlichen in einem Gehäuse angeordnet. Über das Gehäuse kann die Leitungsführungsvorrichtung an einem Glied des Roboterarms befestigt werden.

Ein Teilabschnitt der Versorgungsleitung ist durch das Gehäuse hindurchgeführt, und zwar durch das Gehäuse entlang seiner axialen Längserstreckung von einem hinteren Stirnende des Gehäuses zu einem vorderen Stirnende des Gehäuses. Im Falle eines Leitungsbündels in Art eines Kabels, kann das Gehäuse eine rohrförmige bzw. kreiszylindrische Grundform aufweisen. Dabei verläuft die Versorgungsleitung vorzugsweise koaxial zum Gehäuse. Der durch das Gehäuse hindurchgeführte Teilabschnitt der Versorgungsleitung kann demgemäß in einem umfangseitig geschlossenen Gehäuse verlaufen, wobei lediglich die Stirnseiten des in seiner Grundform rohrförmigen bzw. kreiszylindrischen Gehäuses offen sind.

Die Versorgungsleitung kann beispielsweise einen Schutzschlauch aufweisen, welcher ein oder mehrere Einzelleitungen umfasst, die für die Versorgung von Robotern und/oder deren geführte Werkzeuge mit Versorgungsmedien, beispielsweise mit elektrischer Energie, Hydraulikfluid, Öl, Wasser und/oder Druckluft ausgebildet sind. Eine solche Versorgungsleitung kann Teil einer so genannten Energiezuführung sein. Die Versorgungsleitung der Energiezuführung wird im Allgemeinen durch einen Durchlass gezogen, um in Nähe des Roboterarms diese Leitungen in eine gewünschte Position zu bringen. Die Versorgungsleitung kann mittels einer Federvorrichtung wieder zurückgezogen werden, damit keine durchhängenden Leitungen den Arbeitsbereich des Roboterarms stören.

Die Federvorrichtung kann passiv arbeiten. Im Falle einer passiven Zurückführung eines ausgezogenen Leitungsabschnitts kann die Federvorrichtung beispielsweise eine Federwendel aufweisen, die im eingezogenen Zustand der Versorgungsleitung entspannt ist oder zumindest nahezu entspannt ist und im ausgezogenen Zustand unter Federspannung steht, so dass bei einem Wegfall einer externen Zugkraft auf die Versorgungsleitung die Federwendel sich entspannt und dabei die Versorgungsleitung in den eingezogenen Zustand zurückbewegt wird.

Im vollständig ausgezogenen Zustand des Teilabschnitts der Versorgungsleitung kann die Federwendel bereits derart weit zusammengedrückt sein, dass sie kurz vor ihrem blockierenden Zustand ist, indem die Federwendel keine federelastischen Eigenschaften aufweisen würde, da die einzelnen Windungen der Federwendel dann bereits berührend aneinander anliegen.

Der hintere Endabschnitt der Federvorrichtung ist an dem mit der Versorgungsleitung fest verbundenen Federvorrichtungssitz gelagert. Der Federvorrichtungssitz kann beispielsweise von einem zweiteiligen Kunststoffring gebildet werden, der zwei Halbschalenkörper aufweist, die gegeneinander verschraubt sind und dadurch der Kunststoffring beispielsweise an einem Schutzschlauch der Versorgungsleitung befestigt ist.

Der Federvorrichtungssitz bzw. der Kunststoffring kann einen Sitz oder Anschlag aufweisen, an dem sich der Endabschnitt der Federvorrichtung abstützt. Ein solches Abstützen kann wenigstens durch eine Fixierung einer Federwendel der Federvorrichtung in axialer Richtung, d.h. entgegen der Auszugsrichtung erfolgen. Der hintere Endabschnitt der Federvorrichtung bzw. der hintere Endabschnitt der Federwendel kann damit bezüglich der Versorgungsleitung, insbesondere bezüglich des Schutzschlauches festgelegt sein. Der hintere Endabschnitt der Federvorrichtung bzw. der hintere Endabschnitt der Federwendel kann dabei bezüglich des Federvorrichtungssitzes entweder um eine axiale Achse drehbar gelagert sein oder an dem Federvorrichtungssitz starr befestigt sein. Statt eines Federvorrichtungssitzes mit Sitz oder Anschlag bzw. eines Kunststoffrings mit Sitz oder Anschlag, kann der Federvorrichtungssitz bzw. der Kunststoffring auch ohne einen besonderen Sitz oder Anschlag ausgebildet sein. Beispielsweise kann der Federvorrichtungssitz bzw. der Kunststoffring als ein dem Fachmann als solcher, bekannter Protektor ausgebildet sein.

Der vordere Endabschnitt der Federvorrichtung ist an dem Gegenlagersitz gelagert. Durch den Gegenlagersitz hindurch kann die Versorgungsleitung, insbesondere zusammen mit dem Schutzschlauch aus- und einziehbar, also verschiebbar gelagert sein. Die Federvorrichtung stützt sich insoweit an ihrem vorderen Endabschnitt über den Gegenlagersitz gegen das Gehäuse ab.

Wird die Versorgungsleitung aufgrund einer Gelenkbewegung des Roboterarms bzw. einer Bewegung des Werkzeugs aus dem Gehäuse der Leitungsführungsvorrichtung herausgezogen, wird die Federwendel zusammengedrückt und eine Federrückstellkraft erzeugt. Das Gehäuse kann beispielsweise als ein zweiteiliges Federgehäuse ausgebildet sein. Das Gehäuse kann die Federwendel beispielsweise vor Schmutz schützen, Geräusche dämmen und die Federwendel bzw. den ausziehbaren Teilabschnitt der Versorgungsleitung linear und knicksicher führen. Der Federhalter ist aus montagegründen vorzugsweise zweiteilig ausgebildet und überträgt die Zugkraft von der Versorgungsleitung auf die Federwendel. Um die Feder vor Blockieren zu schützen, und damit einer Beschädigung der Versorgungsleitung vorzubeugen, darf der maximal zulässige Auszugsweg der Versorgungsleitung nicht überschritten werden.

Konkrete Ausführungsbeispiele der Erfindung sind in der nachfolgenden Beschreibung unter Bezugnahme auf die beigefügten Figuren näher erläutert. Konkrete Merkmale dieser exemplarischen Ausführungsbeispiele können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Es zeigen:
- Fig. 1: eine perspektivische Darstellung eines beispielhaften Roboterarms,
- Fig. 2: eine Seitenansicht eines abgewandelten Roboterarms mit einer Leitungsführungsvorrichtung, die mittels einer erfindungsgemäßen Lagerungsvorrichtung gelagert ist,
- Fig. 3: eine Draufsicht auf den Roboterarm gemäß Fig. 2 mit der Leitungsführungsvorrichtung,
- Fig. 4: eine perspektivische Darstellung einer ersten grundlegenden Ausführungsform einer Lagerungsvorrichtung mit einer zwangsgeführten sphärischen Drehführung für eine Leitungsführungsvorrichtung an einem Roboterarm mit zwei zwangsgeführten Drehfreiheitsgraden,
- Fig. 5: eine Ansicht von vorne auf die Lagerungsvorrichtung gemäß Fig. 4 in einer Grundstellung der Leitungsführungsvorrichtung an dem Roboterarm,
- Fig. 6: eine Ansicht von vorne auf die Lagerungsvorrichtung gemäß Fig. 4 in einer ausgelenkten Stellung der Leitungsführungsvorrichtung an dem Roboterarm,
- Fig. 7: eine perspektivische Darstellung einer ersten grundlegenden Ausführungsform einer Lagerungsvorrichtung mit einer zwangsgeführten sphärischen Drehführung für eine Leitungsführungsvorrichtung an einem Roboterarm mit nur einem zwangsgeführten Drehfreiheitsgrad,
- Fig. 8: eine Ansicht von vorne auf die Lagerungsvorrichtung gemäß Fig. 7 in einer Grundstellung der Leitungsführungsvorrichtung an dem Roboterarm,
- Fig. 9: eine Ansicht von vorne auf die Lagerungsvorrichtung gemäß Fig. 7 in einer ausgelenkten Stellung der Leitungsführungsvorrichtung an dem Roboterarm,
- Fig. 10: eine perspektivische Darstellung einer Umfangsführung der ersten grundlegenden Ausführungsform in einer Alleinstellung zusammen mit einer Taumel-Drehscheibe,
- Fig. 11: eine Seitenansicht der ersten grundlegenden Ausführungsform mit einer Umfangsführung gemäß Fig. 10,
- Fig. 12: eine Ansicht von vorne der ersten grundlegenden Ausführungsform mit einer Umfangsführung gemäß Fig. 10 in der Grundstellung,
- Fig. 13: eine perspektivische Darstellung der ersten grundlegenden Ausführungsform mit einer Umfangsführung gemäß Fig. 10 in der ausgelenkten Stellung,
- Fig. 14: eine perspektivische Darstellung der ersten grundlegenden Ausführungsform mit einer Umfangsführung gemäß Fig. 10 in der Grundstellung,
- Fig. 15: eine schematische Darstellung eines Koppelgetriebes einer Lageranordnung der Lagerungsvorrichtung in der zweiten grundlegenden Ausführungsform,
- Fig. 16: eine Seitenansicht einer zweiten grundlegenden Ausführungsform einer Lagerungsvorrichtung mit einem Kipprahmen für eine Leitungsführungsvorrichtung, die mittels eines sphärischen Drehlagers und einem Gelenkviereck als Koppelgetriebe an einem Roboterarm gelagert ist,
- Fig. 17: eine Ansicht von vorne auf die Lagerungsvorrichtung gemäß Fig. 16 in einer Grundstellung der Leitungsführungsvorrichtung,
- Fig. 18: eine Ansicht von vorne auf die Lagerungsvorrichtung gemäß Fig. 16 in einer ausgelenkten Stellung der Leitungsführungsvorrichtung,
- Fig. 19: eine perspektivische Darstellung der zweiten grundlegenden Ausführungsform gemäß Fig. 16,
- Fig. 20: eine andere perspektivische Darstellung der zweiten grundlegenden Ausführungsform gemäß Fig. 16 in der Grundstellung, und
- Fig. 21: eine perspektivische Darstellung der Leitungsführungsvorrichtung gemäß Fig. 16 an einem Roboterarm.

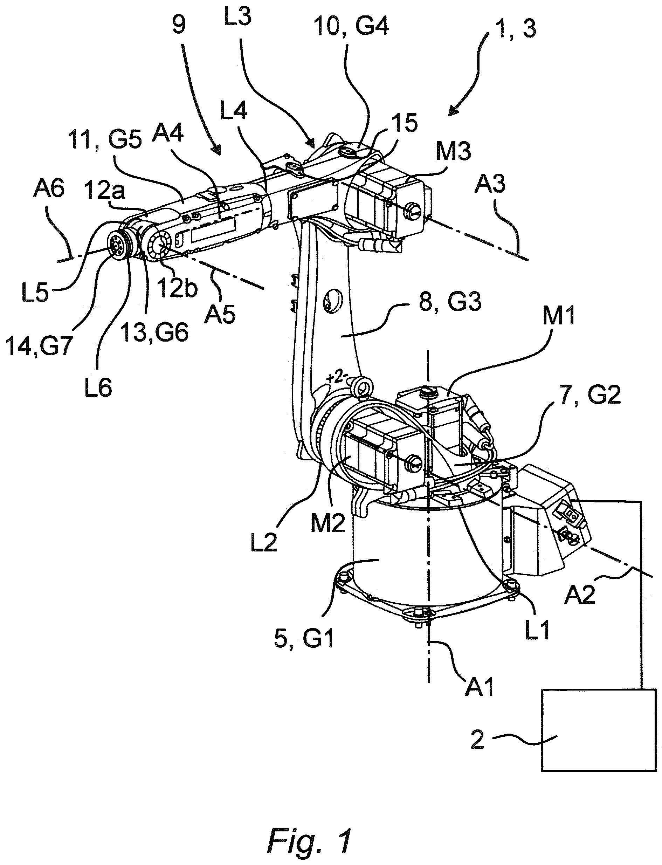

Die Fig. 1 zeigt einen beispielhaften Roboter 1 mit einer Robotersteuerung 2 und einem Roboterarm 3. Der Roboterarm 3 weist ein Grundgestell 5 als erstes Glied G1 auf, an dem ein Karussell 7 als zweites Glied G2 um eine erste vertikale Achse A1 drehbar gelagert und mittels eines ersten Antriebsmotors M1 drehangetrieben ist. Die Achsen A1-A6 des Roboterarms 3 können auch als Gelenke L1-L6 des Roboterarms 3 bezeichnet werden. An dem Karussell 7 ist eine Schwinge 8 als drittes Glied G3 um eine zweite horizontale Achse A2 auf und ab schwenkbar gelagert und mittels eines zweiten Antriebsmotors M2 drehangetrieben. Die Schwinge 8 trägt einen Armausleger 9, der um eine dritte horizontale Achse A3 auf und ab schwenkbar gelagert und mittels eines dritten Antriebsmotors M3 drehangetrieben ist. An dem Armausleger 9, dessen Grundarm 10 ein viertes Glied G4 bildet, ist eine vierte Achse A4 vorgesehen, welche in Längserstreckung des Armauslegers 9 verläuft und über einen vierten Antriebsmotor (nicht dargestellt) einen Vorderarm 11 drehantreibt, der ein fünftes Glied G5 bildet. Von dem Vorderarm 11 erstrecken sich ein erster Schenkel 12a und ein zweiter Schenkel 12b gabelförmig nach vorne. Die beiden Schenkel 12a, 12b tragen eine Lagerung für eine Hand 13, die ein sechstes Glied G6 bildet. Die Lagerung definiert eine fünfte Achse A5 des Roboterarms 3, um welche die Hand 13 mittels eines fünften Antriebsmotors (nicht dargestellt) schwenkbar bewegt werden kann. Ergänzend weist die Hand 13 eine sechste Achse A6 auf, um einen Befestigungsflansch 14, der ein siebtes Glied G7 bildet, mittels eines sechsten Antriebsmotors (nicht dargestellt) drehbar antreiben zu können. Jeder Achse A1 bis A6 ist ein Gelenk L1 bis L6 zugeordnet, welche Gelenke L1 bis L6 im Falle des gezeigten Ausführungsbeispiels in Art einer seriellen Kinematik eines Kickarmroboters die Glieder G1 bis G7 verbinden. Eine erfindungsgemäße Lagerungsvorrichtung 20 kann insbesondere am Grundarm 10 angebracht sein, beispielsweise festgeschraubt an Lagerdomen 15.

Im Falle des Ausführungsbeispiels der Fig. 1 ist der Roboterarm 3 in einer Gelenksstellungskonfiguration gezeigt, die einer Grundstellung des Roboterarms 3 entspricht. Diese Grundstellung kann auch als eine Justagestellung bezeichnet werden. Die Justagepositionen der einzelnen Gelenke entsprechen in den Achsen A1, A4, A5 und A6 jeweils einer 0-Grad Stellung und in der Achse A2 einer -90-Grad Stellung und in der Achse A3 einer +90-Grad Stellung. In dieser Grundstellung des Roboterarms 3 oder dieser Justagestellung des Roboterarms ist der Armausleger 9, insbesondere der Grundarm 10 horizontal ausgerichtet.

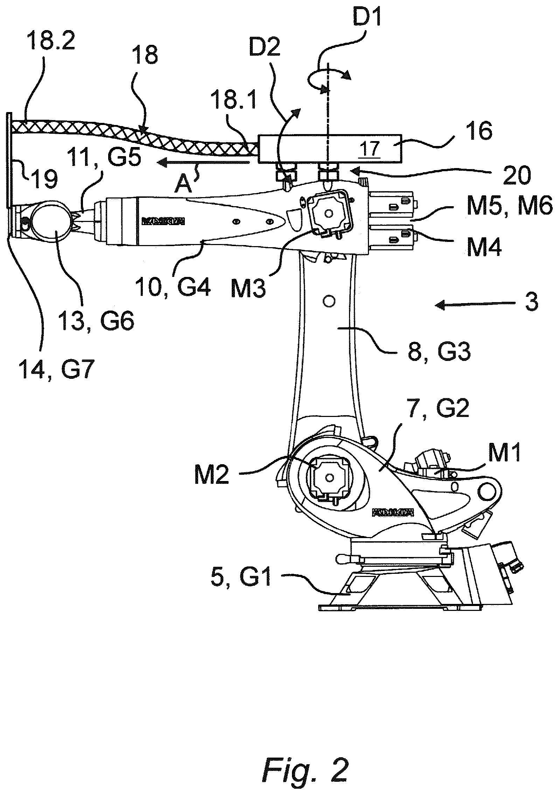

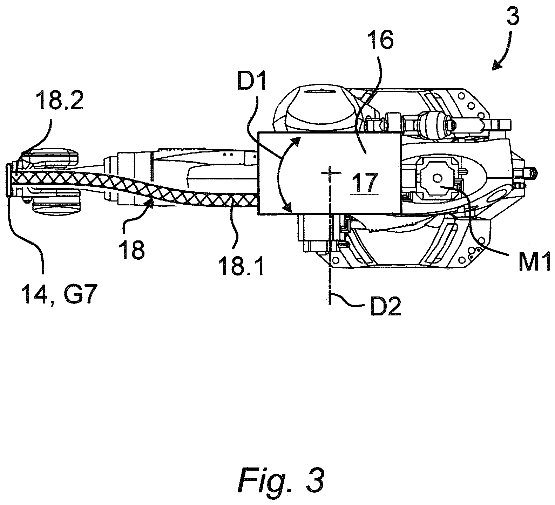

Im Falle des etwas abgewandelten Ausführungsbeispiels der Fig. 2 und Fig. 3 weist der Roboterarm 3 auch die mehreren Glieder G1-G7 und die Glieder G1-G7 gegeneinander verstellende Gelenke L1-L6 auf. Jedes Gelenk L1-L6 ist von jeweils einem Motor M1-M6 des Roboterarms 3 angetrieben. Eine hier nicht näher gezeigte Robotersteuerung 2 kann vorgesehen sein, die Motoren M1-M6 anzusteuern, um die Glieder G1-G7 des Roboterarms 3 durch automatisches Verstellen der Gelenke L1-L6 zu bewegen. Im Falle des vorliegenden Ausführungsbeispiels sind alle Gelenke L1-L6 des Roboterarms 3 als Drehgelenke ausgebildet. Jedes Drehgelenk ist um eine Drehachse A1-A6 drehbar. Der Roboterarm 1 trägt eine Leitungsführungsvorrichtung 16, die einen Aufnahmeraum 17 aufweist, in dem ein Leitungsabschnitt 18.1 einer Energiezuführungsleitung 18 in einer Auszugsrichtung A ausziehbar gelagert ist. Die Energiezuführungsleitung 18 weist ein Leitungsende 18.2 auf, das im Falle des vorliegenden Ausführungsbeispiels bezüglich des Befestigungsflansches 14 mittels eines Halters 19 festgelegt ist.

Der Roboterarm 3 umfasst eine erfindungsgemäße Lagerungsvorrichtung 20, welche die Leitungsführungsvorrichtung 16 mit dem Roboterarm 3 gelenkig verbindet. Die Lagerungsvorrichtung 20 ist dabei ausgebildet, die Leitungsführungsvorrichtung 16 zumindest in zwei verschiedenen, jeweils senkrecht zur Auszugsrichtung A orientierten Drehfreiheitsgraden D1 und D2 beweglich zu lagern. Der erste Drehfreiheitsgrad D1 ermöglicht ein freies Schwenken der Leitungsführungsvorrichtung 16 um eine vertikale Z-Achse (Gierachse). Der zweite Drehfreiheitsgrad D2 ermöglicht ein zwangsgeführtes Nicken oder Rollen der Leitungsführungsvorrichtung 16 um eine in einer horizontalen Ebene liegende X-Achse und/oder Y-Achse.

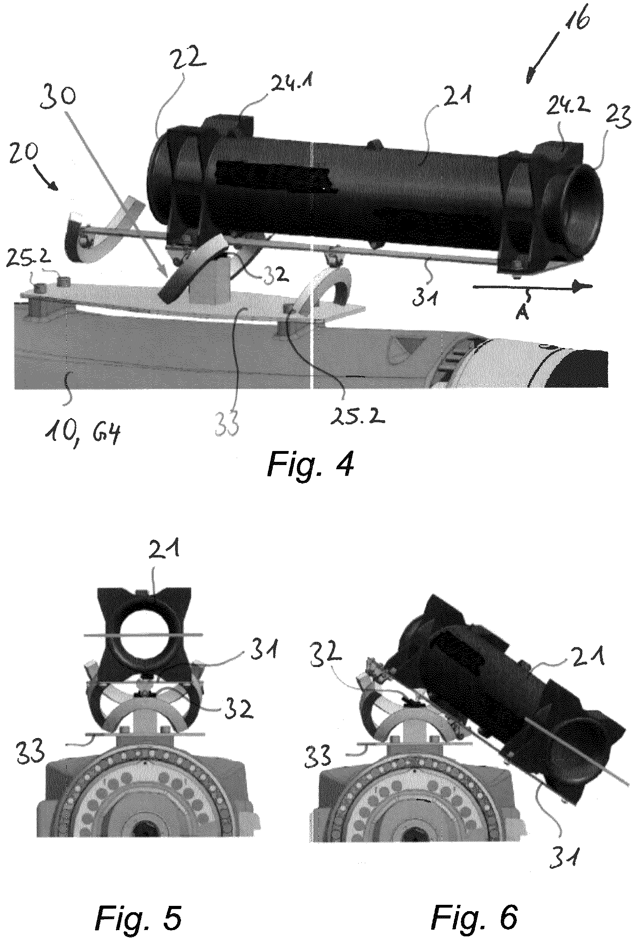

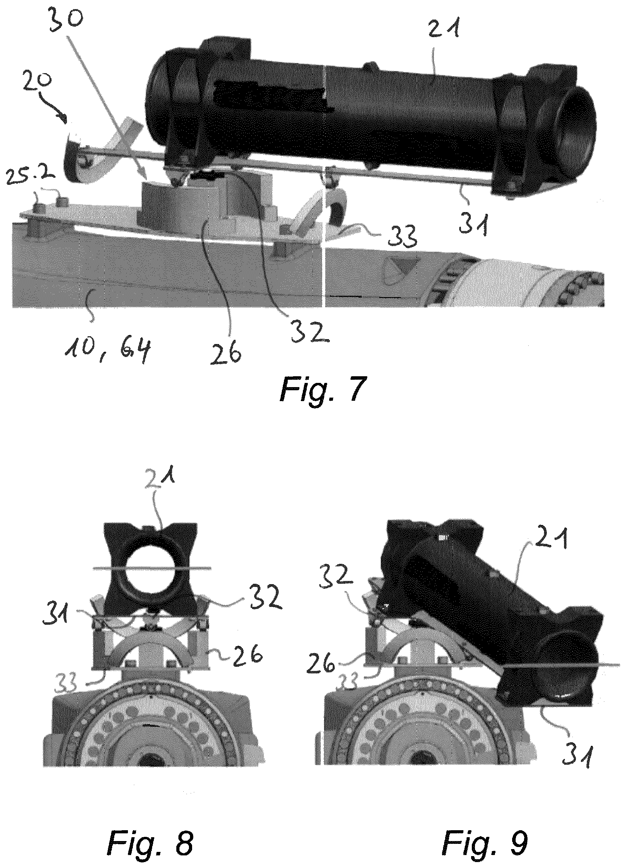

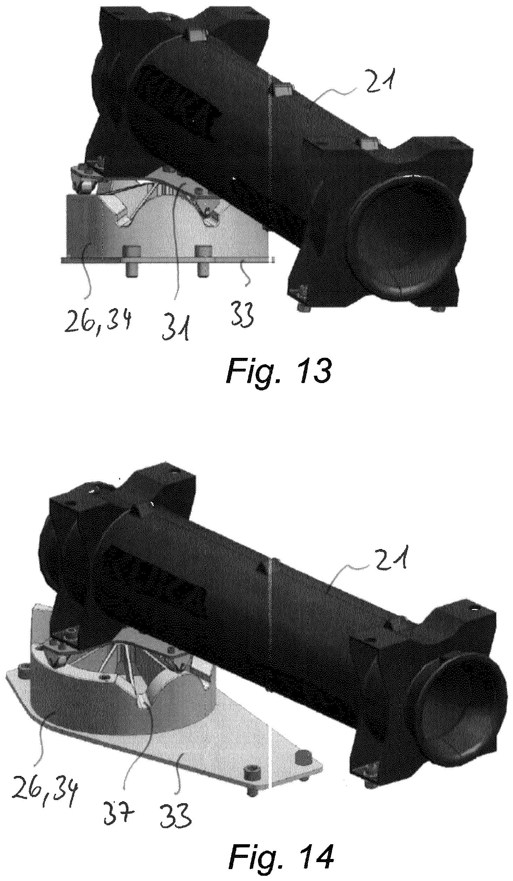

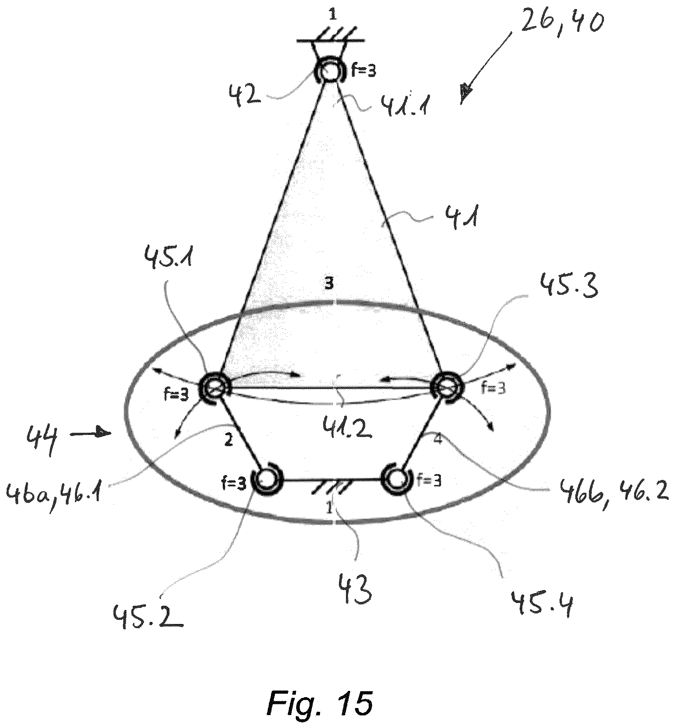

In einer Variante der Leitungsführungsvorrichtung 16 kann diese, wie insbesondere in Fig. 4 bis Fig. 9 dargestellt ist, ein Gehäuse 21 aufweisen, das in Gestalt eines Rohres ausgebildet ist. Das Rohr bildet insoweit eine konturnahe Gehäusewand, in welcher der Leitungsabschnitt 18.1 in Auszugsrichtung A (Fig. 2) geführt ist. Die Leitungsführungsvorrichtung 16 bzw. das Gehäuse 21 weist in diesem Fall eine durch das Gehäuse 21 in seiner axialen Längserstreckung von einem hinteren Stirnende 22 zu einem vorderen Stirnende 23 hindurchgeführte Versorgungsleitung 18 auf (nicht dargestellt), sowie eine innerhalb des Gehäuses 21 angeordnete Federvorrichtung (nicht dargestellt), die ausgebildet ist, die Versorgungsleitung 18 mittels Federkraft selbsttätig aus einem ausgezogenen Zustand der Versorgungsleitung 18 in einen eingezogenen Zustand der Versorgungsleitung 18 zurückzuführen. Das Gehäuse 22 umfasst außerdem zwei Lagerböcke 24.1, 24.2 mit denen die Leitungsführungsvorrichtung 16 im Falle der ersten grundlegenden Ausführungsform gemäß Fig. 4 bis Fig. 14 auf einer Taumel-Drehscheibe 31 der Lagerungsvorrichtung 20 befestigt ist. Im Falle der später noch eingehender beschriebenen zweiten grundlegenden Ausführungsform gemäß Fig. 15 bis Fig. 21 ist die Leitungsführungsvorrichtung 16 mittels der Lagerböcke 24.1, 24.2 hingegen an einem Kipprahmen 41 befestigt.

Die Leitungsführungsvorrichtung 16 weist den Aufnahmeraum 17 auf, in dem der Leitungsabschnitt 18.1 in der Auszugsrichtung A ausziehbar gelagert ist. Die Lagerungsvorrichtung 20 dient der Lagerung bzw. Befestigung der Leitungsführungsvorrichtung 16 an einem Glied G1-G7 des Roboterarms 3. Im Falle der vorliegenden Ausführungsbeispiele ist die Leitungsführungsvorrichtung 16 mittels der Lagerungsvorrichtung 20 stets an dem Grundarm 10 des Roboterarms 3 gelagert.

Die Lagerungsvorrichtung 20 umfasst generell einen ersten Anschlusskörper 25.1, der ausgebildet ist, zum starren Verbinden des ersten Anschlusskörpers 25.1 der Lagerungsvorrichtung 20 mit der Leitungsführungsvorrichtung 16.

Die Lagerungsvorrichtung 20 umfasst außerdem einen zweiten Anschlusskörper 25.2, der ausgebildet ist, zum starren Verbinden des zweiten Anschlusskörpers 25.2 der Lagerungsvorrichtung 20 mit einem Glied G1-G7 des Roboterarms 1, im Falle der vorliegenden Ausführungsbeispiele an dem Grundarm 10 des Roboterarms 3.

Die Lagerungsvorrichtung 20 umfasst des Weiteren eine Lageranordnung 26, die ausgebildet ist, den ersten Anschlusskörper 25.1 relativ zum zweiten Anschlusskörper 25.2 in einem ersten Drehfreiheitsgrad D1, der senkrecht zur Auszugsrichtung A orientiert ist, drehbeweglich zu führen und in einem zweiten Drehfreiheitsgrad D2, der senkrecht sowohl zur Auszugsrichtung A als auch senkrecht zum ersten Drehfreiheitsgrad D1 orientiert ist, in Abhängigkeit der Bewegung des ersten Anschlusskörpers 25.1 um den ersten Drehfreiheitsgrad D1, zwangsgeführt zu lagern.

Die Lageranordnung 26 ist ausgebildet, den zweiten Anschlusskörper 25.2 relativ zum ersten Anschlusskörper 25.1 in allen drei Schubfreiheitsgraden fest zu lagern.

Die Lageranordnung 26 kann je nach Ausführungsform ausgebildet sein, den ersten Anschlusskörper 25.1 relativ zum zweiten Anschlusskörper 25.2 in einem um die Auszugsrichtung A drehenden dritten Drehfreiheitsgrad D3 in Abhängigkeit der Bewegung des ersten Anschlusskörpers 25.1 um den ersten Drehfreiheitsgrad D1 zwangsgeführt zu lagern.

Die Lageranordnung 26 ist im Falle der Ausführungsform gemäß Fig. 4 bis Fig. 14 als eine zwangsgeführte sphärische Drehführung 30 ausgebildet.

Im Falle der Ausführungsform gemäß Fig. 15 bis Fig. 21 die Lageranordnung 26 hingegen als ein räumliches Koppelgetriebe 40 ausgebildet.

In der Ausführungsform gemäß Fig. 4 bis Fig. 14 weist die Lageranordnung 26, insbesondere die zwangsgeführte sphärische Drehführung 30 eine Taumel-Drehscheibe 31 auf, die mittels eines zentral angeordneten sphärischen Drehlagers 32 mit drei Drehfreiheitsgraden an einem Gestell 33 gelagert ist und umfangsseitig an einer mit dem Gestell 33 verbundenen Umfangsführung 34 zwangsgeführt gelagert ist.

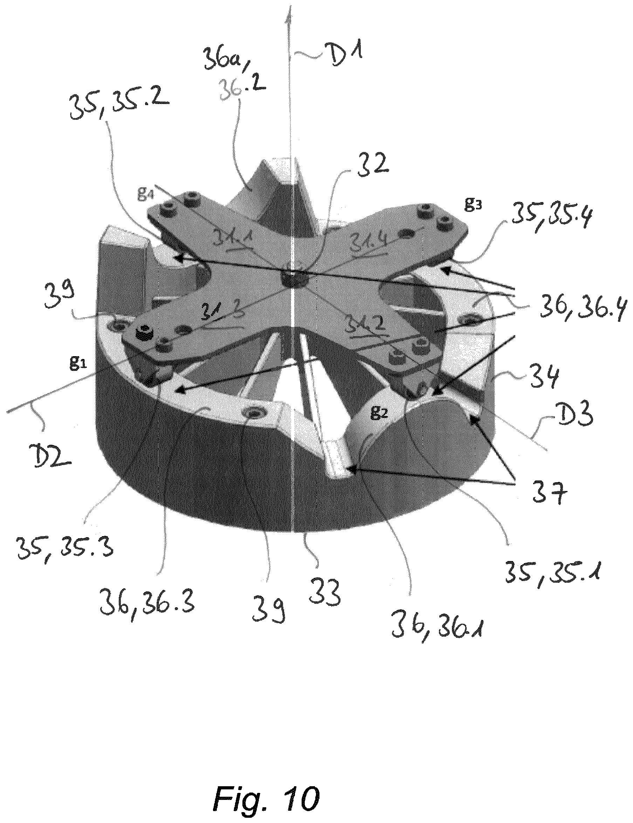

Wie am besten in Fig. 10 zu erkennen ist, ist das Hauptgelenk ein mittig sitzendes Kugelgelenk mit Gelenkfreiheitsgrad f = 3. Um dieses Kugelgelenk sind um 90° versetzt die Führungsbahnfolger 35 bildende Laufrollen 35.1, 35.2, 35.3, 35.4 mit jeweils Gelenkfreiheitsgrad f= 4 angebracht. Diese Laufrollen 35.1, 35.2, 35.3, 35.4 tasten eine räumlich gekrümmte Führungsbahn 36 ab. Die Führungsbahn 36 ist so ausgebildet, dass sich die Leitungsführungsvorrichtung 16 kollisionsfrei um den Roboterarm 3 bewegen kann. Durch gleichzeitiges Abtasten einer komplementären Führungsbahn 36a liegt Zwanglauf vor. Die Achsen der Laufrollen 35.1, 35.2, 35.3, 35.4 schneiden sich in Zentrum des Kugelgelenkes (sphärisches Drehlager 32). Zudem sind die Achsen der Laufrollen 35.1, 35.2, 35.3, 35.4 jeweils paarweise miteinander fluchtend ausgebildet. Da sich alle Achsen der Laufrollen 35.1, 35.2, 35.3, 35.4 in einem Punkt schneiden und die Bewegungsbahn von Gliedpunkten auf konzentrischen Kugelschalen liegen, ist dies eine sphärische Anordnung.

Die Taumel-Drehscheibe 31 kann, wie insbesondere in Fig. 10 gezeigt ist, eine kreuzförmige Gestalt aufweisen. Die Taumel-Drehscheibe 31 kann demgemäß beispielsweise vier um jeweils 90 Grad zueinander versetzt angeordnete Arme 31.1, 31.2, 31.3, 31.4 aufweisen, die sich zumindest im Wesentlichen radial von dem zentral angeordnete sphärische Drehlager 32 ausgehend nach außen wegerstrecken. An einem jeweiligen freien Ende eines jeden Armes 31.1, 31.2, 31.3, 31.4 kann die zwangsgeführte Lagerung in Form der Laufrollen 35.1, 35.2, 35.3, 35.4 und der Führungsbahnen 36 angeordnet sein.

Die Umfangsführung 34 weist somit wenigstens eine mit dem Gestell 33 verbundene Führungsbahn 36 oder mehrere Führungsbahnen 36 auf, auf welchen sich die Führungsbahnfolger 35, d.h. die Laufrollen 35.1, 35.2, 35.3, 35.4 bewegen, wobei diese mit der Taumel-Drehscheibe 31 verbunden sind.

Eine entsprechende Zwangsführung kann also dadurch erreicht werden, dass die Taumel-Drehscheibe 31 zwei gegenüberliegende, voneinander sich wegerstreckende Arme 31.2 und 31.4 bzw. 31.1 und 31.3, jeweils paarweise, aufweist, die jeweils mit einer Laufrolle 35.1, 35.2, 35.3, 35.4 ausgestattet sind. Jede der beiden Paare von Laufrollen 35.2 und 35.4 bzw. 35.1 und 35.3 läuft dabei auf einer eigenen Führungsbahn 36 und komplementären Führungsbahn 36a. Die erste Laufrolle 35.1 läuft auf einer ersten Führungsbahn 36.1 einer ersten Kontur, welche die Bewegung der Taumel-Drehscheibe 31 um den zwangsgeführten (zweiten) Drehfreiheitsgrad D2 bestimmt. Die gegenüberliegende zweite Laufrolle 35.2 läuft auf einer zweiten Führungsbahn 36.2 einer zweiten Kontur, der komplementären Führungsbahn 36a, welche zur ersten Kontur der ersten Führungsbahn 36.1 punktsymmetrisch gespiegelt ausgebildet ist. Durch das Abstützen der zweiten Laufrolle 35.2 auf der zweiten Führungsbahn 36.2 ist ein Abheben der ersten Laufrolle 35.1 von der ersten Führungsbahn 36.1 aufgrund der Hebelwirkung der Arme 31.1 und 31.2 der Taumel-Drehscheibe 31 verhindert. In dieser Weise ist eine Zwangsführung beispielsweise um den zweiten Drehfreiheitsgrad D2 sichergestellt.

Soll eine Zwangsführung auch für den dritten Drehfreiheitsgrad D3 sichergestellt werden, so kann dies dadurch erreicht werden, dass die Taumel-Drehscheibe 31 zwei gegenüberliegende, voneinander sich wegerstreckende zusätzliche Arme 31.3 und 31.4 aufweist, die jeweils mit einer zusätzlichen Laufrolle 35.3 und 35.4 ausgestattet sind. Jede der beiden Laufrollen 35.3 und 35.4 läuft dabei auf einer eigenen Führungsbahn 36.3 und 36.4. Die insoweit dritte Laufrolle 35.3 läuft auf einer dritten Führungsbahn 36.3 einer dritten Kontur, welche die Bewegung der Taumel-Drehscheibe 31 um den zwangsgeführten (dritten) Drehfreiheitsgrad D3 bestimmt. Die der dritten Laufrolle 35.3 gegenüberliegende vierte Laufrolle 35.4 läuft auf einer vierten Führungsbahn 36.4 einer vierten Kontur, welche zur dritten Kontur der dritten Führungsbahn 36.3 punktsymmetrisch gespiegelt ausgebildet ist. Durch das Abstützen der vierten Laufrolle 35.4 auf der vierten Führungsbahn 36.4 ist ein Abheben der dritten Laufrolle 35.3 von der dritten Führungsbahn 36.3 verhindert. Wird eine sich ändernde Zwangsführung, d.h. eine zwangsgeführte Bewegung um den dritten Drehfreiheitsgrad D3 nicht benötigt, wie dies beispielsweise in der dargestellten Ausführungsform der Fig. 10 der Fall ist, können sowohl die dritte Führungsbahn 36.3 als auch die vierte Führungsbahn 36.4, wie in Fig. 10 gezeigt, eben ausgebildet sein und sich in derselben Ebene erstrecken.

Bei einer speziellen Ausführungsvariante mit lediglich einem ersten Führungsbahnfolger 35 (erste Laufrolle 35.1) und einem zweiten Führungsbahnfolger 35 (zweite Laufrolle 35.2) kann die Taumel-Drehscheibe 31 ausgebildet sein, ein Drehen um den dritten Drehfreiheitsgrad D3 nicht zuzulassen, d.h. konstruktiv zu verhindern bzw. zu sperren. Dazu kann die Taumel-Drehscheibe 31 zwar einen dritten Führungsbahnfolger 35 (dritte Laufrolle 35.3) aufweisen, der sich auf einem dritten Bahnabschnitt der Führungsbahn 36 bewegt und einen dem dritten Führungsbahnfolger 35 (dritte Laufrolle 35.3) gegenüberliegend angeordneten vierten Führungsbahnfolger 35 (vierte Laufrolle 35.4) aufweisen, der sich auf einem vierten Bahnabschnitt der Führungsbahn 36 bewegt. Allerdings sind in dieser speziellen Ausführungsvariante der dritte Bahnabschnitt und der vierte Bahnabschnitt als ebene Bahnen ausgebildet, die vorzugsweise beide in derselben Raumebene liegen und diese Raumebene beispielsweise parallel zur Auszugsrichtung (X-Achse) und parallel zur Nickachse (Y-Achse) ausgerichtet ist. Anders ausgedrückt erstrecken sich die ebenen Bahnen des dritten Bahnabschnitts und des vierten Bahnabschnitts zumindest im Wesentlichen senkrecht zur Gierachse (Z-Achse). In dieser eingeschränkten Beweglichkeit der Taumel-Drehscheibe 31 kann die Leitungsführungsvorrichtung 16 somit ausschließlich eine Rotation um die Gierachse (Z-Achse) ausführen und in dessen Abhängigkeit zwangsgeführt, ausschließlich eine Rotation um die Nickachse (Y-Achse) ausführen. Die Leitungsführungsvorrichtung 16 bleibt folglich im Hinblick auf eine Rollbewegung, d.h. einer Rotation um die Auszugsrichtung (X-Achse) jedoch konstant.

Die Taumel-Drehscheibe 31 kann einen dritten Führungsbahnfolger 35 (dritte Laufrolle 35.3) aufweisen, der sich auf einem dritten Bahnabschnitt der Führungsbahn 36 bewegt und die Taumel-Drehscheibe 31 kann einen dem dritten Führungsbahnfolger 35 (dritte Laufrolle 35.3) gegenüberliegend angeordneten vierten Führungsbahnfolger 35 (vierte Laufrolle 35.4) aufweisen, der sich auf einem vierten Bahnabschnitt der Führungsbahn 36 bewegt, wobei der Bahnverlauf des dritten Bahnabschnitts komplementär zum Bahnverlauf des vierten Bahnabschnitts ausgebildet ist, derart, dass ein spielfreies Drehen der Taumel-Drehscheibe 31 um den dritten Drehfreiheitsgrad D3 erfolgt, wenn sich die Taumel-Drehscheibe 31 um den ersten Drehfreiheitsgrad D1 dreht.

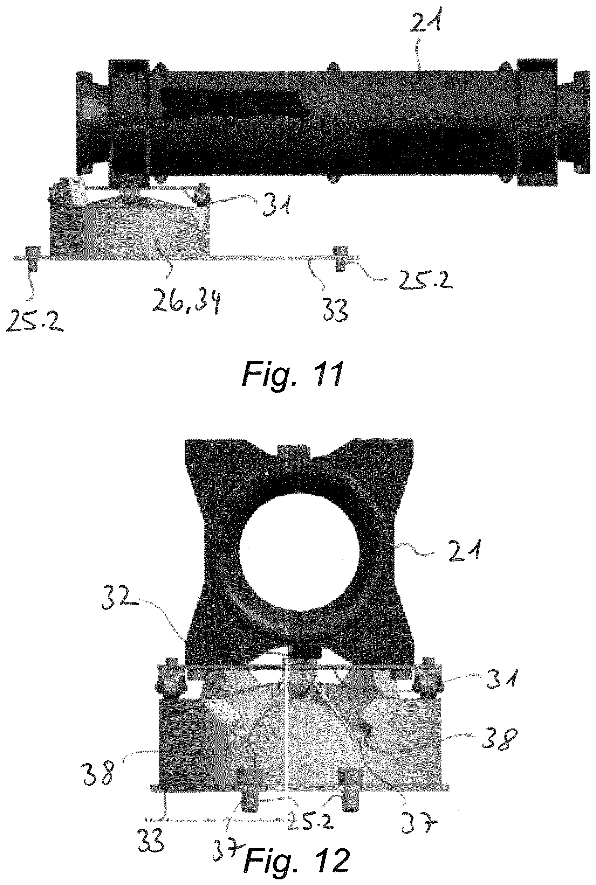

Wie insbesondere in Fig. 10 und Fig. 12 ersichtlich ist, kann die Führungsbahn 36 wenigstens einen Rastanschlag 37 aufweisen, der ausgebildet ist, eine Drehbewegung der Taumel-Drehscheibe 31 um den ersten Drehfreiheitsgrad D1 auf einen Drehwinkel von weniger als 90 Grad zu begrenzen.

Bei Erreichen der konstruktiv vorgegebenen Drehwinkelgrenze rastet die entsprechende Laufrolle 35.1, 35.2, 35.3, 35.4 in den Rastanschlag 37 ein. Dabei kann eine senkrechte Anschlagswand 38 das jeweilige Weiterdrehen über die vorgegebenen Drehwinkelgrenze hinaus verhindern.

Die Führungsbahn 36 bzw. die Umfangsführung 34 als solches kann mittels lösbarer Befestigungsmittel 39 austauschbar an dem Gestell 33 befestigt sein. Die lösbaren Befestigungsmittel 39 können insbesondere Befestigungsmittel sein, die mittels Handwerkzeugen von einem Monteur gelöst bzw. angezogen werden können. So können die lösbaren Befestigungsmittel 39, wie in Fig. 10 aufgezeigt, beispielsweise Schrauben sein, oder Stehbolzen in Verbindung mit Muttern.

In der zweiten grundlegenden Ausführungsform gemäß Fig. 15 bis Fig. 21 ist die Lageranordnung 26 als ein räumliches Koppelgetriebe 40 ausgebildet.

Die zweite grundlegende Ausführungsform einer Lagerungsvorrichtung 20 bzw. einer Lageranordnung 26 kann einen Kipprahmen 41 aufweisen. Der Kipprahmen 41 entspricht funktional insofern der Taumel-Drehscheibe 31 gemäß der ersten grundlegenden Ausführungsform einer Lagerungsvorrichtung 20 bzw. einer Lageranordnung 26. Der Kipprahmen 41 kann wahlweise aus starren Steben gebildet werden oder als ein Festkörper ausgebildet sein. In Falle eines Festkörpers kann der Kipprahmen 41 insofern auch eine Platte bzw. ein flächiges Blech sein. Der Kipprahmen 41 ist über das räumliche Koppelgetriebe 40 an dem Gestell 33 der Lagerungsvorrichtung 20 gelagert.

Die Lageranordnung 26 der zweiten grundlegenden Ausführungsform, insbesondere das räumliche Koppelgetriebe 40 weist den Kipprahmen 41 auf, der an einem ersten Endabschnitt 41.1 des Kipprahmens 41 mittels eines sphärischen Drehlagers 42 mit drei Drehfreiheitsgraden an einem Gestell 43 gelagert ist und an einem dem ersten Endabschnitt 41.1 des Kipprahmens 41 gegenüberliegenden zweiten Endabschnitt 41.2 des Kipprahmens 41 mittels eines Gelenkvierecks 44 an dem Gestell 43 gelagert ist.

Das sphärische Drehlager 42 kann auch als Kugelgelenk bezeichnet werden. Das sphärische Drehlager 42, d.h. das Kugelgelenk zeichnet sich dadurch aus, dass es Rotationen in allen drei Drehfreiheitsgraden (kartesisches Koordinatensystem) zulässt, aber alle drei Schubfreiheitsgrade (lineare X-Richtung, lineare Y-Richtung und lineare Z-Richtung,) sperrt. Das sphärische Drehlager 42 kann an dem Kipprahmen 41 in einer solchen Position angeordnet sein, dass es bei befestigter Anordnung der Leitungsführungsvorrichtung 16 auf dem Kipprahmen 41 zumindest im Wesentlich unterhalb eines bezüglich der Auszugsrichtung A rückseitigen Endes des Aufnahmeraums 17 für den Leitungsabschnitt 18.1 der Leitungsführungsvorrichtung 16 positioniert ist.

Das Gelenkviereck 44 kann eine Gelenksebene aufspannen, die zumindest im Wesentlichen senkrecht zur Auszugsrichtung A des Leitungsabschnitts 18.1 der Leitungsführungsvorrichtung 16 aus dem Aufnahmeraum 17 orientiert ist, wenn die Leitungsführungsvorrichtung 16 auf dem Kipprahmen 41 befestigt ist. Die Gelenksebene des Gelenkvierecks 44 befindet sich vorzugsweise auf einer mittleren Höhe der Längserstreckung des Aufnahmeraums 17 der Leitungsführungsvorrichtung 16. Die Längserstreckung des Aufnahmeraums 17 entspricht der Auszugsrichtung A des Leitungsabschnitts 18.1.

Das Gelenkviereck 44 umfasst insgesamt vier sphärische Drehgelenke 45. Ein erstes sphärisches Drehgelenk 45.1 verbindet ein erstes Koppelglied 46.1 mit dem Kipprahmen 41. Ein zweites sphärisches Drehgelenk 45.2 verbindet das erste Koppelglied 46.1 mit dem Gestell 43. Ein drittes sphärisches Drehgelenk 45.3 verbindet den Kipprahmen 41 mit einem zweiten Koppelglied 46.2. Ein viertes sphärisches Drehgelenk 45.4 verbindet das zweite Koppelglied 46.2 mit dem Gestell 43. Das zweite sphärische Drehgelenk 45.2 und das vierte sphärische Drehgelenk 45.4 sind voneinander beabstandet angeordnet. Ebenso sind das erste sphärische Drehgelenk 45.1 und das dritte sphärische Drehgelenk 45.3 voneinander beabstandet angeordnet. Der Abstand des zweiten sphärischen Drehgelenks 45.2 von dem vierten sphärischen Drehgelenk 45.4 kann insbesondere geringer sein als der Abstand des ersten sphärischen Drehgelenks 45.1 von dem dritten sphärischen Drehgelenk 45.3.

Das Gelenkviereck 44 umfasst demgemäß eine erste Koppelstange 46a, an deren distalem erstem Stangenende ein die erste Koppelstange 46a an den Kipprahmen 41 ankoppelndes erstes sphärische Drehgelenk 45.1 angeordnet ist und an deren proximalem zweiten Stangenende ein die erste Koppelstange 46a an das Gestell 43 ankoppelndes zweites sphärische Drehgelenk 45.2 angeordnet ist, und das Gelenkviereck 44 eine zweite Koppelstange 46b umfasst, an deren distalem dritten Stangenende ein die zweite Koppelstange 46b an den Kipprahmen 41 ankoppelndes drittes sphärische Drehgelenk 45.3 angeordnet ist und an deren proximalem vierten Stangenende ein die zweite Koppelstange 46b an das Gestell 43 ankoppelndes viertes sphärische Drehgelenk 45.4 angeordnet ist.

In dieser Ausführungsform wird das erste Koppelglied 46.1 von einer ersten Koppelstange 46a gebildet und das zweite Koppelglied 46.2 von einer zweiten Koppelstange 46b gebildet. Proximal bedeutet, dass das betreffende Stangenende dem Gestell 43 zugewandt ist, also näher an dem Roboterarm 3 liegt. Distal bedeutet, dass das betreffende Stangenende dem Kipprahmen 41 zugewandt ist, also weiter weg von dem Roboterarm 3 liegt, d.h. näher an der Leitungsführungsvorrichtung 16 liegt. Sowohl die erste Koppelstange 46a als auch die zweite Koppelstange 46b sind starr ausgebildet. Insbesondere haben die erste Koppelstange 46a und die zweite Koppelstange 46b gleiche wirksame Baulängen.

Das erste sphärische Drehgelenk 45.1 und das zweite sphärische Drehgelenk 45.2 der ersten Koppelstange 46a, sowie das dritte sphärische Drehgelenk 45.3 und das vierte sphärische Drehgelenk 45.4 der zweiten Koppelstange 46b können als Gelenkköpfe ausgebildet sein. Die Gelenkköpfe können insbesondere nach DIN ISO 12240-4 ausgeführt sein. Das erste sphärische Drehgelenk 45.1 und das zweite sphärische Drehgelenk 45.2 der ersten Koppelstange 46a, sowie das dritte sphärische Drehgelenk 45.3 und das vierte sphärische Drehgelenk 45.4 der zweiten Koppelstange 46b bilden insoweit Kugelgelenke.

Das zweite sphärische Drehgelenk 45.2 der ersten Koppelstange 46a und das vierte sphärische Drehgelenk 45.4 der zweiten Koppelstange 46b sind, wie dies insbesondere in Fig. 15 dargestellt ist, in einem geringeren Abstand voneinander positioniert an dem Gestell 43 angeordnet, als das erste sphärische Drehgelenk 45.1 der ersten Koppelstange 46a und das dritte sphärische Drehgelenk 45.3 der zweiten Koppelstange 46b an dem Kipprahmen 41 voneinander beabstandet angeordnet sind.

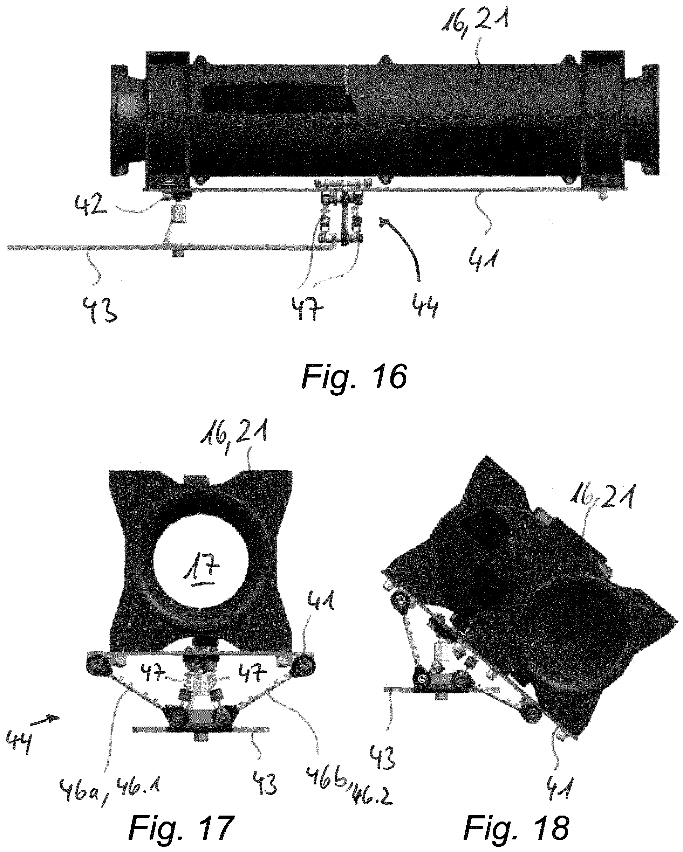

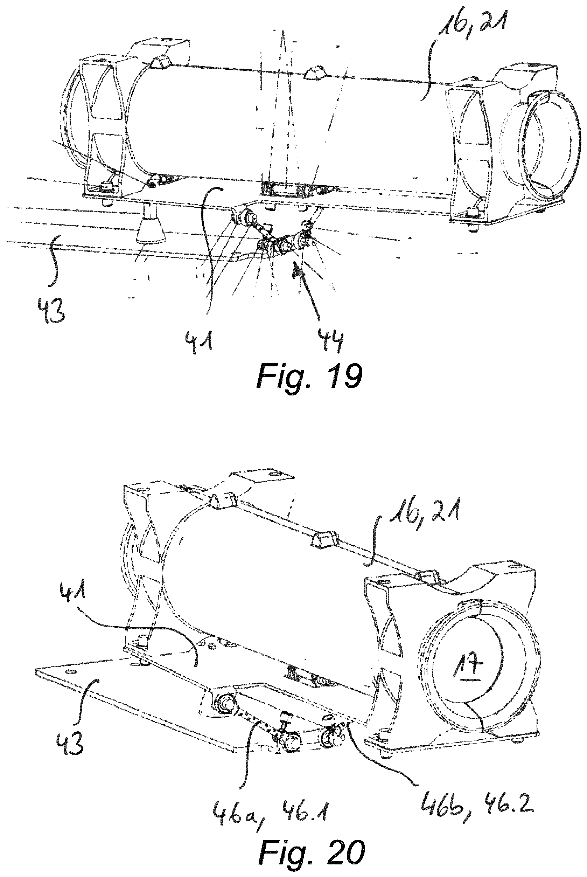

Das sphärische Drehlager 42 ist in einem Abstand von der Austrittsöffnung des Aufnahmeraums 17 angeordnet, der um das Zweifache bis Dreifache größer ist, als der Abstand des Gelenkvierecks 44 von dem sphärischen Drehlager 42. Dies ist insbesondere in Fig. 16 und Fig. 19 ersichtlich.

In einer Grundstellung des Kipprahmens 41 gemäß Fig. 16, Fig. 17, Fig. 19 und Fig. 20, ist dieser mit seiner Haupterstreckungsebene parallel zur Haupterstreckungsebene des Gestells 43 ausgerichtet. Dies entspricht auch einer Grundstellung der Leitungsführungsvorrichtung 16, wenn diese auf dem Kipprahmen 41 befestigt ist. In einer Grundstellung des Roboterarms 3 (Fig. 1) ist beispielsweise ein Armausleger 9 des Roboterarms 3 horizontal ausgerichtet. Wenn die Lagerungsvorrichtung 20 und somit auch die Leitungsführungsvorrichtung 16 an dem Armausleger 9 des Roboterarms 3 angebracht ist, erstreckt sich der Kipprahmen 41 in seiner Grundstellung auch in einer horizontalen Ebene. Demgemäß erstreckt sich die Leitungsführungsvorrichtung 16 dann auch in einer horizontalen Ebene. Dies bedeutet folglich, dass in der Grundstellung auch die Auszugsrichtung A der Leitungsführungsvorrichtung 16 horizontal verläuft.

Wird nun durch eine ziehende Bewegung, ausgelöst durch eine Bewegung der Roboterhand im Raum, welche das frontseitige Ende der Leitung 18 führt, der Leitungsabschnitt 18.1 aus dem Aufnahmeraum 17 schräg zur Auszugsrichtung A der Leitungsführungsvorrichtung 16 herausgezogen, wirken laterale Kräfte auf das Gehäuse 21 der Leitungsführungsvorrichtung 16, so dass diese sich aufgrund des freien ersten Drehfreiheitsgrades D1 der Lagerungsvorrichtung 20 seitlich wegdrehen kann, was unmittelbar bewirkt, dass aufgrund des zwangsgeführten zweiten Drehfreiheitsgrades D2 und/oder dritten Drehfreiheitsgrades D3 der Kipprahmen 41 und somit auch die Leitungsführungsvorrichtung 16 sich nach unten neigt und/oder sich axial verdreht. Dies entspricht dann einem Nicken bzw. Rollen der Leitungsführungsvorrichtung 16, das sich der Schwenkbewegung der Leitungsführungsvorrichtung 16 überlagert.

Das Gelenkviereck kann, wie insbesondere in Fig. 17 erkennbar ist, eine Federeinrichtung 47 aufweisen, die ausgebildet ist, den Kipprahmen 41 bezüglich des Gestells 43 in einer mittleren Grundstellung zu halten, wenn keine äußeren Kräfte auf die Lagerungsvorrichtung 20 einwirken.

Wenn durch eine entlastende Bewegung der Roboterhand im Raum, welche das frontseitige Ende der Leitung 18 führt, der Leitungsabschnitt 18.1 wieder in den Aufnahmeraum 17 entgegen der Auszugsrichtung A der Leitungsführungsvorrichtung 16 hineingezogen wird, wirken keine lateralen Kräfte mehr auf das Gehäuse 21 der Leitungsführungsvorrichtung 16 oder zumindest wirken nur noch geringere laterale Kräfte auf das Gehäuse 21 der Leitungsführungsvorrichtung 16. In diesem Fall kann es gewünscht sein, dass sich die Leitungsführungsvorrichtung 16 wieder selbsttätig in ihre Ausgangsstellung, d.h. ihre Grundstellung (siehe Fig. 17 beispielsweise) zurückbewegt. Diese Funktion kann durch die Federeinrichtung 47 bewirkt werden. Die Federeinrichtung 47 wirkt insoweit auf das Gelenkviereck 44 ein, um es in seine Grundstellung zurückzubewegen. Die Grundstellung des Gelenkvierecks 44 entspricht demgemäß der Grundstellung des Kipprahmens 41 und damit der Grundstellung der Leitungsführungsvorrichtung 16.

Das sphärische Drehlager 42 kann einen Kugelkopf umfassen, welcher in einer Kugelpfanne drehbar geführt ist, derart, dass der Kugelkopf um Kippwinkel bis zu 40 Grad abkippbar gelagert ist.

Das erste sphärische Drehgelenk 45.1, das zweite sphärische Drehgelenk 45.2, das dritte sphärische Drehgelenk 45.3 und das vierte sphärische Drehgelenk 45.4 können als Gelenkköpfe ausgebildet sein.

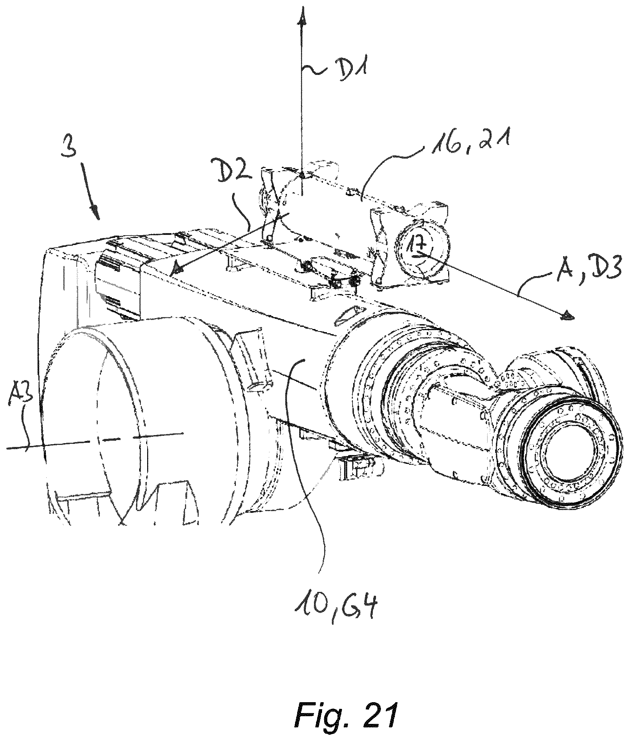

Die Fig. 21 zeigt den Roboterarm 3, aufweisend mehrere Glieder G1-G7 und die Glieder G1-G7 gegeneinander verstellende Gelenke L1-L6, sowie die Leitungsführungsvorrichtung 16, die einen Aufnahmeraum 17 aufweist, in dem ein Leitungsabschnitt einer Energiezuführungsleitung (nicht dargestellt) in einer Auszugsrichtung A ausziehbar gelagert ist, zum Führen der Energiezuführungsleitung entlang mehrerer der Glieder G1-G7 des Roboterarms 3, wobei der Roboterarm 3 eine Lagerungsvorrichtung 16 aufweist, welche die Leitungsführungsvorrichtung 16 in wenigstens zwei verschiedenen, jeweils senkrecht zur Auszugsrichtung A der Energiezuführungsleitung orientierten Drehfreiheitsgraden D1, D2, D3 zwangsgekoppelt beweglich, beispielsweise an dem Glied 10, G4 des Roboterarms 3, lagert.

## Patentansprüche

1. Lagerungsvorrichtung für eine Leitungsführungsvorrichtung (16) eines Roboterarms (3), wobei die Leitungsführungsvorrichtung (16) einen Aufnahmeraum (17) aufweist, in dem ein Leitungsabschnitt (18.1) in einer Auszugsrichtung (A) ausziehbar gelagert ist, zur Lagerung der Leitungsführungsvorrichtung (16) an dem Roboterarm (3), umfassend:
- einen ersten Anschlusskörper (25.1), der ausgebildet ist, zum starren Verbinden des ersten Anschlusskörpers (25.1) der Lagerungsvorrichtung (20) mit einer Leitungsführungsvorrichtung (16),
- einen zweiten Anschlusskörper (25.2), der ausgebildet ist, zum starren Verbinden des zweiten Anschlusskörpers (25.2) der Lagerungsvorrichtung (20) mit einem Glied (G1-G7) eines Roboterarms (3), und
- eine Lageranordnung (26), die ausgebildet ist, den ersten Anschlusskörper (25.1) relativ zum zweiten Anschlusskörper (25.2) in einem ersten Drehfreiheitsgrad (D1), der senkrecht zur Auszugsrichtung (A) orientiert ist, drehbeweglich zu führen und in einem zweiten Drehfreiheitsgrad (D2), der senkrecht sowohl zur Auszugsrichtung (A) als auch senkrecht zum ersten Drehfreiheitsgrad (D1) orientiert ist, zu lagern,
**gekennzeichnet dadurch, dass** die Lageranordnung ausgebildet ist, den ersten Anschlusskörper (25.1) relativ zum zweiten Anschlusskörper (25.2) in dem zweiten Drehfreiheitsgrad (D2) in Abhängigkeit der Bewegung des ersten Anschlusskörpers (8) um den ersten Drehfreiheitsgrad (D1) zwangsgeführt zu lagern.

2. Lagerungsvorrichtung nach Anspruch 1, **dadurch gekennzeichnet, dass** die Lageranordnung (26) ausgebildet ist den zweiten Anschlusskörper (25.2) relativ zum ersten Anschlusskörper (25.1) in allen drei Schubfreiheitsgraden fest zu lagern.

3. Lagerungsvorrichtung nach Anspruch 1 oder 2, **dadurch gekennzeichnet, dass** die Lageranordnung (26) ausgebildet ist den ersten Anschlusskörper (25.1) relativ zum zweiten Anschlusskörper (25.2) in einem um die Auszugsrichtung (A) drehenden dritten Drehfreiheitsgrad (D1) in Abhängigkeit der Bewegung des ersten Anschlusskörpers (25.1) um den ersten Drehfreiheitsgrad (D1) zwangsgeführt zu lagern.

4. Lagerungsvorrichtung nach einem der Ansprüche 1 bis 3, **dadurch gekennzeichnet, dass** die Lageranordnung (26) als eine zwangsgeführte sphärische Drehführung (30) ausgebildet ist.

5. Lagerungsvorrichtung nach Anspruch 4, **dadurch gekennzeichnet, dass** die Lageranordnung (12), insbesondere die zwangsgeführte sphärische Drehführung (30) eine Taumel-Drehscheibe (31) aufweist, die mittels eines zentral angeordneten sphärischen Drehlagers (32) mit drei Drehfreiheitsgraden an einem Gestell (33) gelagert ist und umfangsseitig an einer mit dem Gestell (33) verbundenen Umfangsführung (34) zwangsgeführt gelagert ist.

6. Lagerungsvorrichtung nach Anspruch 5, **dadurch gekennzeichnet, dass** die Umfangsführung (34) eine mit dem Gestell (33) verbundene Führungsbahn (36) aufweist, auf welcher sich wenigstens ein Führungsbahnfolger (35) bewegt, der mit der Taumel-Drehscheibe (31) verbunden ist.

7. Lagerungsvorrichtung nach Anspruch 6, **dadurch gekennzeichnet, dass** der wenigstens eine Führungsbahnfolger (35) eine Laufrolle (35.1, 35.2, 35.3, 35.4) umfasst, welche an der Taumel-Drehscheibe (31) drehbar gelagert ist und welche auf der Führungsbahn (36) abwälzt.

8. Lagerungsvorrichtung nach Anspruch 6 oder 7, **dadurch gekennzeichnet, dass** die Taumel-Drehscheibe (31) einen ersten Führungsbahnfolger (35) aufweist, der sich auf einem ersten Bahnabschnitt der Führungsbahn (36) bewegt und die Taumel-Drehscheibe (31) einen dem ersten Führungsbahnfolger (35) gegenüberliegend angeordneten zweiten Führungsbahnfolger (35) aufweist, der sich auf einem zweiten Bahnabschnitt der Führungsbahn (36) bewegt, wobei der Bahnverlauf des ersten Bahnabschnitts komplementär zum Bahnverlauf des zweiten Bahnabschnitts ausgebildet ist, derart, dass ein spielfreies Drehen der Taumel-Drehscheibe (31) um den zweiten Drehfreiheitsgrad (D2) erfolgt, wenn sich die Taumel-Drehscheibe (31) um den ersten Drehfreiheitsgrad (D1) dreht.

9. Lagerungsvorrichtung nach einem der Ansprüche 6 bis 8, **dadurch gekennzeichnet, dass** die Taumel-Drehscheibe (31) einen dritten Führungsbahnfolger (35) aufweist, der sich auf einem dritten Bahnabschnitt der Führungsbahn (36) bewegt und die Taumel-Drehscheibe (31) einen dem dritten Führungsbahnfolger (35) gegenüberliegend angeordneten vierten Führungsbahnfolger (35) aufweist, der sich auf einem vierten Bahnabschnitt der Führungsbahn (36) bewegt, wobei der Bahnverlauf des dritten Bahnabschnitts komplementär zum Bahnverlauf des vierten Bahnabschnitts ausgebildet ist, derart, dass ein spielfreies Drehen der Taumel-Drehscheibe (31) um den dritten Drehfreiheitsgrad (D3) erfolgt, wenn sich die Taumel-Drehscheibe (31) um den ersten Drehfreiheitsgrad (D1) dreht.

10. Lagerungsvorrichtung nach Anspruch 1 oder 2, **dadurch gekennzeichnet, dass** die Lageranordnung (26) einen Kipprahmen (41) aufweist, der an einem ersten Endabschnitt (41.1) des Kipprahmens (41) mittels eines sphärischen Drehlagers (42) mit drei Drehfreiheitsgraden an einem Gestell (43) gelagert ist und an einem dem ersten Endabschnitt (41.1) des Kipprahmens (41) gegenüberliegenden zweiten Endabschnitt (41.2) des Kipprahmens (41) mittels eines Gelenkvierecks (44) an dem Gestell (43) gelagert ist.

11. Lagerungsvorrichtung nach Anspruche 10, **dadurch gekennzeichnet, dass** das Gelenkviereck (44) eine erste Koppelstange (46a) umfasst, an deren distalem erstem Stangenende ein die erste Koppelstange (46a) an den Kipprahmen (41) ankoppelndes erstes sphärische Drehgelenk (45.1) angeordnet ist und an deren proximalem zweiten Stangenende ein die erste Koppelstange (46a) an das Gestell (43) ankoppelndes zweites sphärische Drehgelenk (45.2) angeordnet ist, und das Gelenkviereck (44) eine zweite Koppelstange (46b) umfasst, an deren distalem dritten Stangenende ein die zweite Koppelstange (46b) an den Kipprahmen (41) ankoppelndes drittes sphärische Drehgelenk (45.3) angeordnet ist und an deren proximalem vierten Stangenende ein die zweite Koppelstange (46b) an das Gestell (43) ankoppelndes viertes sphärische Drehgelenk (45.4) angeordnet ist.

12. Lagerungsvorrichtung nach Anspruch 11, **dadurch gekennzeichnet, dass** das zweite sphärische Drehgelenk (45.2) der ersten Koppelstange (46a) und das vierte sphärische Drehgelenk (45.4) der zweiten Koppelstange (46b) in einem geringeren Abstand voneinander positioniert an dem Gestell (43) angeordnet sind, als das erste sphärische Drehgelenk (45.1) der ersten Koppelstange (46a) und das dritte sphärische Drehgelenk (45.3) der zweiten Koppelstange (46b) an dem Kipprahmen (41) voneinander beabstandet angeordnet sind.

13. Lagerungsvorrichtung nach einem der Ansprüche 10 bis 12, **dadurch gekennzeichnet, dass** das sphärische Drehlager (42) in einem Abstand von einer Austrittsöffnung des Aufnahmeraums (17) angeordnet ist, der um das Zweifache bis Dreifache größer ist, als der Abstand des Gelenkvierecks (44) von dem sphärischen Drehlager (42).

14. Lagerungsvorrichtung nach einem der Ansprüche 10 bis 13, **dadurch gekennzeichnet, dass** das Gelenkviereck (44) eine Federeinrichtung (47) aufweist, die ausgebildet ist, den Kipprahmen (41) bezüglich des Gestells (43) in einer mittleren Grundstellung zu halten, wenn keine äußeren Kräfte auf die Lagerungsvorrichtung (20) einwirken.

15. Roboterarm, aufweisend mehrere Glieder (G1-G7) und die Glieder (G1-G7) gegeneinander verstellende Gelenke (L1-L6), sowie eine Leitungsführungsvorrichtung (16), die einen Aufnahmeraum (17) aufweist, in dem ein Leitungsabschnitt (18.1) einer Energiezuführungsleitung (18) in einer Auszugsrichtung (A) ausziehbar gelagert ist, zum Führen der Energiezuführungsleitung (18) entlang mehrerer der Glieder (G1-G7) des Roboterarms (3), **dadurch gekennzeichnet, dass** der Roboterarm (3) eine Lagerungsvorrichtung (20) nach einem der Ansprüche 1 bis 14 aufweist, welche die Leitungsführungsvorrichtung (16), insbesondere ein Gehäuse (21) der Leitungsführungsvorrichtung (16) in zwei verschiedenen, jeweils senkrecht zur Auszugsrichtung (A) des Leitungsabschnitts (18.1) der Energiezuführungsleitung (18) orientierten Drehfreiheitsgraden (D1, D2, D3) zwangsgekoppelt beweglich an einem Glied (G1-G7) des Roboterarms (3) lagert.

## Claims

1. Supporting apparatus for a line-routing apparatus (16) of a robot arm (3), wherein the line-routing apparatus (16) has a receiving space (17) in which a line portion (18.1) is supported so as to be extendable in an extension direction (A), for supporting the line-routing apparatus (16) on the robot arm (3), comprising:
- a first connection body (25.1) which is configured for rigid connection of the first connection body (25.1) of the supporting apparatus (20) to a line-routing apparatus (16),
- a second connection body (25.2) which is configured for rigid connection of the second connection body (25.2) of the supporting apparatus (20) to a member (G1-G7) of a robot arm (3), and
- a bearing arrangement (26) which is configured for rotationally movable guidance in a first rotational degree of freedom (D1), which is oriented perpendicularly to the extension direction (A), and for support in a second rotational degree of freedom (D2), which is oriented perpendicularly both to the extension direction (A) and to the first rotational degree of freedom (D1), of the first connection body (25.1) relative to the second connection body (25.2),
**characterized in that** the bearing arrangement is configured for support in the second rotational degree of freedom (D2) of the first connection body (25.1) relative to the second connection body (25.2) in a positively guided manner according to the movement of the first connection body (8) around the first rotational degree of freedom (D1).

2. Supporting apparatus according to Claim 1, **characterized in that** the bearing arrangement (26) is configured for fixed support in all three translational degrees of freedom of the second connection body (25.2) relative to the first connection body (25.1).

3. Supporting apparatus according to Claim 1 or 2, **characterized in that** the bearing arrangement (26) is configured for support in a third rotational degree of freedom (D1), with rotation around the extension direction (A), of the first connection body (25.1) relative to the second connection body (25.2) in a positively guided manner according to the movement of the first connection body (25.1) around the first rotational degree of freedom (D1).

4. Supporting apparatus according to one of Claims 1 to 3, **characterized in that** the bearing arrangement (26) is in the form of a spherical rotary guide (30) for positive guidance.

5. Supporting apparatus according to Claim 4, **characterized in that** that the bearing arrangement (12), in particular the spherical rotary guide (30) for positive guidance, has a nutating disc (31) which is supported by means of a centrally arranged spherical rotary bearing (32) with three rotational degrees of freedom on a stand (33) and, at the circumference, is supported in a positively guided manner on a circumferential guide (34) connected to the stand (33).

6. Supporting apparatus according to Claim 5, **characterized in that** the circumferential guide (34) has a guide track (36) which is connected to the stand (33) and on which at least one guide-track follower (35), connected to the nutating disc (31), moves.

7. Supporting apparatus according to Claim 6, **characterized in that** the at least one guide-track follower (35) comprises a running roller (35.1, 35.2, 35.3, 35.4) which is mounted rotatably on the nutating disc (31) and which rolls on the guide track (36).

8. Supporting apparatus according to Claim 6 or 7, **characterized in that** the nutating disc (31) has a first guide-track follower (35) which moves on a first track portion of the guide track (36), and the nutating disc (31) has a second guide-track follower (35), arranged opposite the first guide-track follower (35), which moves on a second track portion of the guide track (36), wherein the track profile of the first track portion is formed in a manner complementary to the track profile of the second track portion in such a way that play-free rotation of the nutating disc (31) around the second rotational degree of freedom (D2) is realized when the nutating disc (31) rotates around the first rotational degree of freedom (D1).

9. Supporting apparatus according to one of Claims 6 to 8, **characterized in that** the nutating disc (31) has a third guide-track follower (35) which moves on a third track portion of the guide track (36), and the nutating disc (31) has a fourth guide-track follower (35), arranged opposite the third guide-track follower (35), which moves on a fourth track portion of the guide track (36), wherein the track profile of the third track portion is formed in a manner complementary to the track profile of the fourth track portion in such a way that play-free rotation of the nutating disc (31) around the third rotational degree of freedom (D3) is realized when the nutating disc (31) rotates around the first rotational degree of freedom (D1).

10. Supporting apparatus according to Claim 1 or 2, **characterized in that** the bearing arrangement (26) has a tilting frame (41) which, at a first end portion (41.1) of the tilting frame (41), is supported by means of a spherical rotary bearing (42) with three rotational degrees of freedom on a stand (43) and which, at a second end portion (41.2) of the tilting frame (41), opposite the first end portion (41.1) of the tilting frame (41), is supported on the stand (43) by means of an articulated quadrilateral (44).

11. Supporting apparatus according to Claim 10, **characterized in that** the articulated quadrilateral (44) comprises a first coupling rod (46a) on whose distal, first rod end is arranged a first spherical rotary joint (45.1), which couples the first coupling rod (46a) to the tilting frame (41), and on whose proximal, second rod end is arranged a second spherical rotary joint (45.2), which couples the first coupling rod (46a) to the stand (43), and the articulated quadrilateral (44) comprises a second coupling rod (46b) on whose distal, third rod end is arranged a third spherical rotary joint (45.3), which couples the second coupling rod (46b) to the tilting frame (41), and on whose proximal, fourth rod end is arranged a fourth spherical rotary joint (45.4), which couples the second coupling rod (46b) to the stand (43).

12. Supporting apparatus according to Claim 11, **characterized in that** the second spherical rotary joint (45.2) of the first coupling rod (46a) and the fourth spherical rotary joint (45.4) of the second coupling rod (46b) are arranged at a shorter distance from one another on the stand (43) than the first spherical rotary joint (45.1) of the first coupling rod (46a) and the third spherical rotary joint (45.3) of the second coupling rod (46b) on the tilting frame (41).

13. Supporting apparatus according to one of Claims 10 to 12, **characterized in that** the spherical pivot bearing (42) is arranged at a distance from an exit opening of the receiving space (17) that is two to three times greater than the distance of the articulated quadrilateral (44) from the spherical pivot bearing (42).

14. Supporting apparatus according to one of Claims 10 to 13, **characterized in that** the articulated quadrilateral (44) has a spring device (47) which is configured to hold the tilting frame (41) in a middle home position with respect to the stand (43) if no external forces act on the supporting apparatus (20).

15. Robot arm, having multiple members (G1-G7) and joints (L1-L6) which adjust the members (G1-G7) relative to one another, and also having a line-routing apparatus (16) which has a receiving space (17) in which a line portion (18.1) of an energy-supply line (18) is supported so as to be extendable in an extension direction (A), for guiding the energy-supply line (18) along a plurality of the members (G1-G7) of the robot arm (3), **characterized in that** the robot arm (3) has a supporting apparatus (20) according to one of Claims 1 to 14 that supports the line-routing apparatus (16), in particular a housing (21) of the line-routing apparatus (16), on a member (G1-G7) of the robot arm (3) in two different rotational degrees of freedom (D1, D2, D3), each oriented perpendicularly to the extension direction (A) of the line portion (18.1) of the energy-supply line (18), such that it is movable in a positively coupled manner.

## Revendications

1. Dispositif de montage pour un dispositif de guidage de ligne (16) d'un bras robotisé (3), le dispositif de guidage de ligne (16) comportant un espace de réception (17), dans lequel est montée une section de ligne (18.1) de manière à pouvoir être extraite dans une direction d'extraction (A), pour le montage du dispositif de guidage de ligne (16) sur le bras robotisé (3), comprenant :
- un premier corps de raccordement (25.1), qui est formé pour relier rigidement le premier corps de raccordement (25.1) du dispositif de montage (20) à un dispositif de guidage de ligne (16),
- un deuxième corps de raccordement (25.2), qui est formé pour relier rigidement le deuxième corps de raccordement (25.2) du dispositif de montage (20) à un élément (G1-G7) d'un bras robotisé (3), et
- un ensemble de palier (26), qui est formé pour guider de manière mobile en rotation le premier corps de raccordement (25.1) par rapport au deuxième corps de raccordement (25.2) selon un premier degré de liberté de rotation (D1), qui est orienté perpendiculairement à la direction d'extraction (A), et selon un deuxième degré de liberté de rotation (D2), qui est orienté à la fois perpendiculairement à la direction d'extraction (A) et perpendiculairement au premier degré de liberté de rotation (D1),
**caractérisé en ce que** l'ensemble de palier est formé pour monter avec un guidage forcé le premier corps de raccordement (25.1) par rapport au deuxième corps de raccordement (25.2) selon le deuxième degré de liberté de rotation (D2) en fonction du déplacement du premier corps de raccordement (8) autour du premier degré de liberté de rotation (D1).

2. Dispositif de montage selon la revendication 1, **caractérisé en ce que** l'ensemble de palier (26) est formé pour monter de manière fixe le deuxième corps de raccordement (25.2) par rapport au premier corps de raccordement (25.1) selon les trois degrés de liberté de poussée.

3. Dispositif de montage selon la revendication 1 ou 2, **caractérisé en ce que** l'ensemble de palier (26) est formé pour monter avec un guidage forcé le premier corps de raccordement (25.1) par rapport au deuxième corps de raccordement (25.2) selon un troisième degré de liberté de rotation (D1) tournant autour de la direction d'extraction (A) en fonction du déplacement du premier corps de raccordement (25.1) autour du premier degré de liberté de rotation (D1).

4. Dispositif de montage selon l'une des revendications 1 à 3, **caractérisé en ce que** l'ensemble de palier (26) est formé comme un guidage rotatif sphérique (30) à guidage forcé.

5. Dispositif de montage selon la revendication 4, **caractérisé en ce que** l'ensemble palier (12), en particulier le guidage rotatif sphérique (30) à guidage forcé comporte un disque rotatif oscillant (31) qui est monté sur un châssis (33) au moyen d'un palier rotatif sphérique (32) disposé au centre avec trois degrés de liberté de rotation et qui est monté avec un guidage forcé sur le côté périphérique sur un guidage périphérique (34) relié au châssis (33).

6. Dispositif de montage selon la revendication 5, **caractérisé en ce que** le guidage périphérique (34) comporte une voie de guidage (36) reliée au châssis (33), sur laquelle se déplace au moins un suiveur (35) de voie de guidage, qui est relié au disque rotatif oscillant (31).

7. Dispositif de montage selon la revendication 6, **caractérisé en ce que** l'au moins un suiveur (35) de voie de guidage comprend un galet (35.1, 35.2, 35.3, 35.4), qui est monté de manière rotative sur le disque rotatif oscillant (31) et qui roule sur la voie de guidage (36).

8. Dispositif de montage selon la revendication 6 ou 7, **caractérisé en ce que** le disque oscillant rotatif (31) comporte un premier suiveur (35) de voie de guidage, qui se déplace sur une première section de voie de la voie de guidage (36) et le disque oscillant rotatif (31) comporte un deuxième suiveur (35) de voie de guidage disposé en face du premier suiveur (35) de voie de guidage, qui se déplace sur une deuxième section de voie de la voie de guidage (36), le tracé de voie de la première section de voie étant complémentaire au tracé de voie de la deuxième section de voie de telle manière qu'une rotation sans jeu du disque rotatif oscillant (31) autour du deuxième degré de liberté de rotation (D2) est effectuée lorsque le disque rotatif oscillant (31) tourne autour du premier degré de liberté de rotation (D1).

9. Dispositif de montage selon l'une des revendications 6 à 8, **caractérisé en ce que** le disque oscillant rotatif (31) comporte un troisième suiveur (35) de voie de guidage, qui se déplace sur une troisième section de voie de la voie de guidage (36) et le disque oscillant rotatif (31) comporte un quatrième suiveur (35) de voie de guidage disposé en face du troisième suiveur (35) de voie de guidage, qui se déplace sur une quatrième section de voie de la voie de guidage (36), le tracé de voie de la troisième section de voie étant complémentaire au tracé de voie de la quatrième section de voie de telle manière qu'une rotation sans jeu du disque rotatif oscillant (31) autour du troisième degré de liberté de rotation (D3) est effectuée lorsque le disque rotatif oscillant (31) tourne autour du premier degré de liberté de rotation (D1).

10. Dispositif de montage selon la revendication 1 ou 2, **caractérisé en ce que** l'ensemble de palier (26) comporte un cadre basculant (41), qui est monté sur une première section d'extrémité (41.1) du cadre basculant (41) au moyen d'un palier rotatif sphérique (42) avec trois degrés de liberté de rotation sur un châssis (43) et est monté sur une deuxième section d'extrémité (41.2) du cadre basculant (41) faisant face à la première section d'extrémité (41.1) du cadre basculant (41) au moyen d'un quadrilatère articulé (44) sur le châssis (43).

11. Dispositif de montage selon la revendication 10, **caractérisé en ce que** le quadrilatère articulé (44) comprend une première tige d'accouplement (46a), sur la première extrémité distale de laquelle est disposé un premier pivot sphérique (45.1) couplant la première tige d'accouplement (46a) au cadre basculant (41) et sur la deuxième extrémité proximale de laquelle est disposé un deuxième pivot sphérique (45.2) couplant la première tige d'accouplement (46a) au châssis (43), et le quadrilatère articulé (44) comprend une deuxième tige d'accouplement (46b), sur la troisième extrémité distale de laquelle est disposé un troisième pivot sphérique (45.3) couplant la deuxième tige d'accouplement (46b) au cadre basculant (41) et sur la quatrième extrémité proximale de laquelle est disposé un quatrième pivot sphérique (45.4) couplant la deuxième tige d'accouplement (46b) au châssis (43).

12. Dispositif de montage selon la revendication 11, **caractérisé en ce que** le deuxième pivot sphérique (45.2) de la première tige d'accouplement (46a) et le quatrième pivot sphérique (45.4) de la deuxième tige d'accouplement (46b) sont disposés sur le châssis (43) tout en étant positionnés à une distance l'un de l'autre inférieure à celle de laquelle le premier pivot sphérique (45.1) de la première tige d'accouplement (46a) et le troisième pivot sphérique (45.3) de la deuxième tige d'accouplement (46b) sont disposés de manière espacée l'un de l'autre sur le cadre basculant (41).

13. Dispositif de montage selon l'une des revendications 10 à 12, **caractérisé en ce que** le palier rotatif sphérique (42) est disposé à une distance d'une ouverture de sortie de l'espace de réception (17), qui est deux à trois fois supérieure à la distance entre le quadrilatère articulé (44) et le palier rotatif sphérique (42).

14. Dispositif de montage selon l'une des revendications 10 à 13, **caractérisé en ce que** le quadrilatère articulé (44) comporte un système à ressort (47) qui est formé pour maintenir le cadre basculant (41) dans une position de base centrale par rapport au châssis (43) en l'absence de forces extérieures agissant sur le dispositif de montage (20).

15. Bras robotisé comportant plusieurs éléments (G1-G7) et articulations (L1-L6) réglant les éléments (G1-G7) les uns par rapport aux autres, et un dispositif de guidage de ligne (16), qui comporte un espace de réception (17) dans lequel une section de ligne (18.1) d'une ligne d'alimentation en énergie (18) est montée de manière à pouvoir être extraite dans une direction d'extraction (A), pour guider la ligne d'alimentation en énergie (18) le long de plusieurs des éléments (G1-G7) du bras robotisé (3), **caractérisé en ce que** le bras robotisé (3) comporte un dispositif de montage (20) selon l'une des revendications 1 à 14, qui monte le dispositif de guidage de ligne (16), en particulier un boîtier (21) du dispositif de guidage de ligne (16), selon deux degrés de liberté de rotation (D1, D2, D3) différents orientés chacun perpendiculairement à la direction d'extraction (A) de la section de ligne (18.1) de la ligne d'alimentation en énergie (18) avec un couplage forcé de manière mobile sur un élément (G1-G7) du bras robotisé (3).
